# EUROPEAN PATENT SPECIFICATION

(11) **EP 3 748 911 B1**
(45) Date of publication and mention of the grant of the patent: **08.01.2025**
(21) Application number: 19776702.3
(22) Date of filing: 27.02.2019
(51) Int. Cl.: H04L 43/026, H04L 43/0852, H04L 43/0864, H04L 41/5009, H04W 24/08

(54) **METHOD FOR DETECTING QUALITY OF SERVICE, DEVICE, AND SYSTEM**
VERFAHREN ZUR ERKENNUNG DER DIENSTGÜTE, VORRICHTUNG UND SYSTEM
PROCÉDÉ DE DÉTECTION DE QUALITÉ DE SERVICE, DISPOSITIF ET SYSTÈME

(30) Priority: 29.03.2018 CN 201810273516
(43) Date of publication of application: 09.12.2020
(73) Proprietor: HUAWEI TECHNOLOGIES CO., LTD., Shenzhen, Guangdong 518129 (CN)
(72) Inventor: SUN, Dekui, Shenzhen, Guangdong 518129 (CN); JIANG, Ming, Shenzhen, Guangdong 518129 (CN); ZHOU, Han, Shenzhen, Guangdong 518129 (CN)
(74) Representative: Grünecker Patent- und Rechtsanwälte PartG mbB
(86) International application number: PCT/CN2019/076349
(87) International publication number: WO 2019/184645

(56) References cited:
- EP-A1- 2 903 212
- EP-A1- 3 297 318
- WO-A1-2011/050540
- WO-A1-2017/026687
- CN-A- 103 581 142
- CN-A- 104 284 344
- US-B2- 7 184 507
- US-B2- 9 253 049
- NTT DOCOMO: "Clarifications and evaluation for Per QoS class tunnel protocol model", vol. SA WG2, no. Kaohsiung city, Taiwan; 20161017 - 20161021, 16 October 2016 (2016-10-16), XP051155426, Retrieved from the Internet <URL:http://www.3gpp.org/ftp/Meetings_3GPP_SYNC/SA2/Docs/> [retrieved on 20161016]
- "3rd Generation Partnership Project; Technical Specification Group Services and System Aspects; Study on Access Traffic Steering, Switching and Splitting support in the 5G system architecture (Release 16)", 3GPP STANDARD; TECHNICAL REPORT; 3GPP TR 23.793, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.0, 13 March 2018 (2018-03-13), pages 1 - 24, XP051450418

## Description

### TECHNICAL FIELD

This application relates to the field of communications technologies, and in particular, to methods and a system for detecting quality of service of a service, and devices.

### BACKGROUND

To address challenges from wireless broadband technologies and keep the leading edge of a 3rd generation partnership project (3rd generation partnership project, 3GPP) network, the 3GPP standards organization formulates, at the end of 2016, a network architecture of a next generation mobile communications system (next generation system), which is referred to as a 5th generation (5th generation, 5G) network architecture.

In the 5G network architecture, ultra-reliable low-latency communications (ultra-reliable low latency communication, URLLC) scenarios are defined, mainly including services such as unmanned driving and industrial automation that require low-latency and high-reliability connections. An advanced air interface technology and an optimized core network architecture in a 5G network make it possible to fulfill requirements of the foregoing scenarios. However, in the 5G network, instability exists in both a bottom-layer link and an upper-layer routing protocol. In addition, from the perspective of network construction, a delay, an error, or even a network fault is inevitable. However, most of the foregoing scenarios include services related to life safety or production safety, and therefore no error is tolerant. Therefore, when the 5G network is used to serve industries sensitive to life safety and production safety, quality of service of a service needs to be detected in real time in the 5G network. When the quality of service of the service does not meet a preset condition, a corresponding adjustment measure or protection measure may be taken.

Currently, in the prior art, a typical technology for detecting quality of service of a service is a congestion control technology based on the transmission control protocol (transmission control protocol, TCP). The TCP is used for connection-oriented communication. Before communication, a TCP transmit end establishes a connection to a TCP receive end. In a communication process, the TCP provides reliable transmission of a service packet through a delayed acknowledgment (acknowledgement, ACK) mechanism. To be specific, after the TCP transmit end sends a service packet, the TCP receive end does not immediately return an ACK packet, but waits until a preset time expires, and returns ACK packets to the TCP transmit end after receiving a latest service packet. If the TCP transmit end does not receive, within a specified time (for example, before a timeout retransmission timer of a TCP protocol stack expires), the ACK packets returned by the TCP receive end for the service packet sent by the TCP transmit end, the TCP transmit end considers that quality of service of a service is poor. Then, the TCP transmit end reduces a transmit rate to reduce impact on a network. However, because quality of service of a service can be detected only through the delayed ACK mechanism, a corresponding consumed time from sending a service packet to receiving an ACK packet is generally 100 ms. However, the existing 5G technical specification (technical standards, TS) 22186 specifies that, in a remote driving scenario, end-to-end latency between a terminal and a server needs to be always within 5 ms. Therefore, real-time performance of the foregoing technology for detecting quality of service of a service cannot meet service requirements of industrial control, the internet of vehicles, and the like.

Therefore, how to detect quality of service of a service in real time is an urgent problem to be resolved currently.

Document EP 2 903 212 A1 discloses a method for measuring a network delay. The method includes: acquiring delay measurement information obtained by measuring a service flow by at least one target logical port TLP, where the delay measurement information includes: timestamp information, a service flow identifier, and a TLP identifier; and transmitting the delay measurement information to a measurement control point MCP, so that the MCP determines details about a network delay according to the timestamp information, the service flow identifier, and the TLP identifier.

Document EP 3 297 318 A1 discloses a user terminal comprising a controller configured to perform measurement for a data delay in an uplink; and a transmitter configured to report information indicating results of the measurement to a radio base station.

The document "3rd Generation Partnership Project; Technical Specification Group Services and System Aspects; Study on Access Traffic Steering, Switching and Splitting support in the 5G system architecture (Release 16)", 3GPP STANDARD; TECHNICAL REPORT; 3GPP TR 23.793, 3RD GENERATION PARTNERSHIP PROJECT (3GPP), no. V0.3.0, discloses a path measurement function by monitoring the performance of the available path and report this information to a traffic distribution function. The path performance information may be measured by bandwidth, losss rate or/and latency.

### SUMMARY

This application provides methods, devices and a system for detecting quality of service of a service in real time.

To achieve the foregoing objective, the following technical solutions are used in the embodiments of this application.

According to a first aspect, a method for detecting quality of service of a service according to claim 1 is provided. In the prior art, the quality of service of the service can be detected only through a delayed ACK mechanism. However, according to the method for detecting quality of service of a service provided in this embodiment of this application, the packet sending device may send the first packet including the session information of the service and the packet type of the first packet to the packet receiving device. After receiving the first packet, the packet receiving device may determine at least one of the quality of service of the service or the segment quality of service of the service based on the session information of the service and the packet type of the first packet. Therefore, based on the solution, at least one of the quality of service of the service or the segment quality of service of the service can be detected in real time.

In a possible design, the generating, by a packet sending device, a first packet includes: obtaining, by the packet sending device, the session information of the service and the packet type of the first packet; and encapsulating, by the packet sending device, the session information of the service and the packet type of the first packet by using a first network protocol stack, to obtain the first packet. Based on the solution, the packet sending device can obtain the first packet.

In a possible design, the packet sending device includes a terminal, and the packet receiving device includes an access device or a network device; or the packet sending device includes an access device, and the packet receiving device includes a terminal; and the session information of the service is encapsulated by using at least one of a service data adaptation protocol SDAP or a packet data convergence protocol PDCP in the first network protocol stack, and the packet type of the first packet is encapsulated by using the SDAP or the PDCP in the first network protocol stack. Based on the solution, the first packet transmitted between the terminal and the access device can be encapsulated.

In a possible design, the packet sending device includes a terminal, and the packet receiving device includes an access device or a network device; or the packet sending device includes an access device, and the packet receiving device includes a terminal; and the session information of the service is encapsulated by using at least one of an SDAP or a PDCP in the first network protocol stack, and the packet type of the first packet is encapsulated by using a traffic flow control protocol TFCP in the first network protocol stack; or the session information of the service and the packet type of the first packet are encapsulated by using a TFCP in the first network protocol stack. Based on the solution, the first packet transmitted between the terminal and the access device can be encapsulated.

In a possible design, the packet sending device includes an access device, and the packet receiving device includes a network device; or the packet sending device includes the network device, and the packet receiving device includes a terminal or an access device; and the session information of the service and the packet type of the first packet are encapsulated by using a GTP-U in the first network protocol stack. Based on the solution, the first packet transmitted between the network device and the access device can be encapsulated.

In a possible design, the packet sending device includes an access device, and the packet receiving device includes a network device; or the packet sending device includes the network device, and the packet receiving device includes a terminal or an access device; and the session information of the service is encapsulated by using a GTP-U in the first network protocol stack, and the packet type of the first packet is encapsulated by using a TFCP in the first network protocol stack; or the session information of the service and the packet type of the first packet are encapsulated by using a TFCP in the first network protocol stack. Based on the solution, the first packet transmitted between the network device and the access device can be encapsulated.

According to a second aspect, a method for detecting quality of service of a service according to claim 6 is provided. For a technical effect of the second aspect, refer to the description of the technical effect of the first aspect. Details are not described herein again.

According to a third non-claimed aspect, a method for detecting quality of service of a service includes: receiving, by a loopback device, a first packet from a packet transceiver device, where the first packet includes first session information of a service, a packet type of the first packet, and a loopback indication; and sending, by the loopback device, a second packet to the packet transceiver device, where the second packet includes second session information of the service, a packet type of the second packet, and the loopback indication, the packet type of the second packet is the same as the packet type of the first packet, and the second packet is used to detect quality of service of the service or segment quality of service of the service. In the prior art, the quality of service of the service can be detected only through a delayed ACK mechanism. However, according to the method for detecting quality of service of a service provided in this embodiment of this application, after receiving the first packet from the packet transceiver device, the loopback device may send the second packet including the second session information of the service, the packet type of the second packet, and the loopback indication to the packet transceiver device. After receiving the second packet, the packet transceiver device may determine the quality of service of the service or the segment quality of service of the service based on the second session information of the service, the packet type of the second packet, and the loopback indication. Therefore, based on the solution, the quality of service of the service or the segment quality of service of the service can be detected in real time.

In a possible design, the loopback device includes a network device; or the loopback device includes an access device, and the packet transceiver device includes a network device; and the first session information of the service includes a first tunnel endpoint identifier TEID and a quality of service flow identifier QFI, and the second session information of the service includes a second TEID and the QFI; or the first session information of the service includes a first tunnel endpoint identifier TEID, and the second session information of the service includes a second TEID.

In a possible design, the loopback device includes a terminal; or the loopback device includes an access device, and the packet transceiver device includes a terminal; and the first session information of the service includes a QFI, and the second session information of the service includes the QFI; or the first session information of the service includes a first radio bearer identifier and a QFI, and the second session information of the service includes a second radio bearer identifier and the QFI.

In a possible design, the first packet further includes a detection identifier, and the second packet further includes the detection identifier, where the detection identifier is used to indicate to detect the quality of service of the service or the segment quality of service of the service.

In a possible design, the first packet further includes a timestamp, and the second packet further includes the timestamp, where the timestamp is used to represent a moment at which the packet transceiver device sends the first packet to the loopback device, or the timestamp is used to represent a moment at which the packet transceiver device generates the first packet.

According to a fourth aspect, a packet sending device according to claim 8 is provided.

The function may be implemented by using hardware, or may be implemented by using hardware executing corresponding software. The hardware or the software includes one or more modules corresponding to the function.

According to a fifth non-claimed aspect, a packet sending device is provided, including: a processor and a memory, where the memory is configured to store a computer-executable instruction, and when the packet sending device runs, the processor executes the computer-executable instruction stored in the memory, and the packet sending device is enabled to perform the method for detecting quality of service of a service according to any one of the possible designs of the first aspect.

According to a sixth non-claimed aspect, a packet sending device is provided, including a processor, where the processor is configured to: after being coupled to a memory and reading an instruction in the memory, perform, according to the instruction, the method for detecting quality of service of a service according to any one of the possible designs of the first aspect.

According to a seventh non-claimed aspect, a computer readable storage medium is provided, where the computer readable storage medium stores an instruction, and when the instruction is run on a computer, the computer is enabled to perform the method for detecting quality of service of a service according to any one of the possible designs of the first aspect.

According to an eighth non-claimed aspect, a computer program product including an instruction is provided. When the computer program product runs on a computer, the computer is enabled to perform the method for detecting quality of service of a service according to any one of the possible designs of the first aspect.

According to a ninth non-claimed aspect, a chip system is provided, where the chip system includes a processor configured to support a packet sending device in implementing a function in the first aspect, for example, generating a first packet. In a possible design, the chip system further includes a memory, where the memory is configured to store a program instruction and data that are necessary for the packet sending device. The chip system may include a chip, or may include a chip and another discrete component.

For a technical effect brought by any design of the fourth aspect to the ninth aspect, refer to technical effects brought by different designs of the first aspect. Details are not described herein again.

According to a tenth aspect, a packet receiving device according to claim 9 is provided.

The function may be implemented by using hardware, or may be implemented by using hardware executing corresponding software. The hardware or the software includes one or more modules corresponding to the function.

According to an eleventh non-claimed aspect, a packet receiving device is provided, including: a processor and a memory. The memory is configured to store a computer-executable instruction, and when the packet receiving device runs, the processor executes the computer-executable instruction stored in the memory, and the packet receiving device is enabled to perform the method for detecting quality of service of a service according to any one of the possible designs of the first aspect.

According to a twelfth non-claimed aspect, a packet receiving device is provided, including a processor, where the processor is configured to: after being coupled to a memory and reading an instruction in the memory, perform, according to the instruction, the method for detecting quality of service of a service according to any one of the possible designs of the second aspect.

According to a thirteenth non-claimed aspect, a computer readable storage medium is provided, where the computer readable storage medium stores an instruction, and when the instruction is run on a computer, the computer is enabled to perform the method for detecting quality of service of a service according to any one of the possible designs of the second aspect.

According to a fourteenth non-claimed aspect, a computer program product including an instruction is provided. When the computer program product runs on a computer, the computer is enabled to perform the method for detecting quality of service of a service according to any one of the possible designs of the second aspect.

According to a fifteenth non-claimed aspect, a chip system is provided. The chip system includes a processor, configured to support a packet receiving device in implementing a function in the second aspect, for example, determining at least one of quality of service of a service or segment quality of service of the service based on session information of the service and a packet type of a first packet. In a possible design, the chip system further includes a memory, where the memory is configured to store a program instruction and data that are necessary for the packet receiving device. The chip system may include a chip, or may include a chip and another discrete component.

For a technical effect brought by any design of the tenth aspect to the fifteenth aspect, refer to technical effects brought by different designs of the second aspect. Details are not described herein again.

According to a sixteenth non-claimed aspect, a loopback device is provided, and the loopback device has a function of implementing the method according to any one of the possible designs of the third aspect. The function may be implemented by using hardware, or may be implemented by using hardware executing corresponding software. The hardware or the software includes one or more modules corresponding to the function.

According to a seventeenth non-claimed aspect, a loopback device is provided, including: a processor and a memory. The memory is configured to store a computer-executable instruction, and when the loopback device runs, the processor executes the computer-executable instruction stored in the memory, and the loopback device performs the method for detecting quality of service of a service according to any one of the possible designs of the third aspect.

According to an eighteenth non-claimed aspect, a loopback device is provided, including a processor, where the processor is configured to: after being coupled to a memory and reading an instruction in the memory, perform, according to the instruction, the method for detecting quality of service of a service according to any one of the possible designs of the third aspect.

According to a nineteenth non-claimed aspect, a computer readable storage medium is provided, where the computer readable storage medium stores an instruction, and when the instruction is run on a computer, the computer is enabled to perform the method for detecting quality of service of a service according to any one of the possible designs of the third aspect.

According to a twentieth non-claimed aspect, a computer program product including an instruction is provided. When the computer program product runs on a computer, the computer is enabled to perform the method for detecting quality of service of a service according to any one of the possible designs of the third aspect.

According to a twenty-first non-claimed aspect, a chip system is provided, where the chip system includes a processor configured to support a loopback device in implementing a function in the third aspect, for example, generating a second packet. The chip system may include a chip, or may include a chip and another discrete component.

For a technical effect brought by any design of the sixteenth aspect to the twenty-first aspect, refer to technical effects brought by different designs of the third aspect. Details are not described herein again.

According to a twenty-second aspect, a system for detecting quality of service of a service according to claim 10 is provided, where the system for detecting quality of service of a service includes a packet sending device and a packet receiving device.

In a possible design, the packet sending device includes a network device, and the packet receiving device includes a terminal; and the system for detecting quality of service of a service further includes an access device. The access device is configured to: receive the first packet from the network device, and determine first segment quality of service of the service, where the first segment quality of service of the service includes corresponding quality of service of the service transmitted on a path between the access device and the network device. The access device is further configured to: insert first segment information of the service and the first segment quality of service of the service into the first packet, and send the first packet to the terminal.

In a possible design, the access device is further configured to receive the first segment information of the service from a session management function network element. The first segment information of the service includes a first segment identifier of the service; or the first segment information of the service includes an address of the network device, an address of the access device, and a packet transmission direction; or the first segment information of the service includes an address of the access device.

In a possible design, the packet sending device includes a terminal, and the packet receiving device includes a network device; and the system for detecting quality of service of a service further includes an access device. The access device is configured to: receive the first packet from the terminal, and determine second segment quality of service of the service, where the second segment quality of service of the service includes corresponding quality of service of the service transmitted on a path between the access device and the terminal. The access device is further configured to: insert second segment information of the service and the second segment quality of service of the service into the first packet, and send the first packet to the network device.

In a possible design, the access device is further configured to receive the second segment information of the service from a session management function network element. The second segment information of the service includes a second segment identifier of the service; or the second segment information of the service includes an address of the terminal, an address of the access device, and a packet transmission direction; or the second segment information of the service includes an address of the access device.

In a possible design, the packet sending device may be the packet sending device according to any one of the fourth aspect to the sixth aspect, or the computer readable storage medium according to the seventh aspect, or the computer program product that includes an instruction according to the eighth aspect, or the chip system according to the ninth aspect.

In a possible design, the packet receiving device may be the packet receiving device according to any one of the tenth aspect to the twelfth aspect, or the computer readable storage medium according to the thirteenth aspect, or the computer program product that includes an instruction according to the fourteenth aspect, or the chip system according to the fifteenth aspect.

For a technical effect brought by any one of the designs in the twenty-second aspect, refer to technical effects brought by different designs in the first aspect or the second aspect. Details are not described herein again.

These aspects or other aspects in this application may be clearer and more intelligible through the following detailed description together with the following drawings. The invention is defined in the appended independent claims to which reference should be made. Advantageous features are set out in the appended dependent claims.

### BRIEF DESCRIPTION OF DRAWINGS

FIG. 1 is a schematic diagram of service flow distribution in a 5G network;
FIG. 2 is a schematic structural diagram 1 of a packet format in a 5G network;
FIG. 3 is a schematic structural diagram 2 of a packet format in a 5G network;
FIG. 4 is a schematic structural diagram 3 of a packet format in a 5G network;
FIG. 5 shows a system for detecting quality of service of a service;
FIG. 6 is a schematic diagram of a 5G network architecture;
FIG. 7 is a schematic diagram of a 4G network architecture;
FIG. 8 is a schematic diagram of a 4.5G network architecture;
FIG. 9 is a schematic diagram of a hardware structure of a communications device;
FIG. 10 is a schematic flowchart 1 of a method for detecting quality of service of a service;
FIG. 11(a) to FIG. 11(d) are a schematic structural diagram 1 of a format of a first packet;
FIG. 12 is a schematic flowchart 2 of a method for detecting quality of service of a service;
FIG. 13 (a) to FIG. 13(d) are a schematic structural diagram 2 of a format of a first packet;
FIG. 14 (a) to FIG. 14(d) are a schematic structural diagram 3 of a format of a first packet;
FIG. 15 is a schematic diagram of a monitoring link;
FIG. 16 shows another system for detecting quality of service of a service;
FIG. 17 is a schematic flowchart 3 of a method for detecting quality of service of a service;
FIG. 18 is a schematic diagram of loopback detection;
FIG. 19 is a schematic structural diagram of a packet sending device;
FIG. 20 is a schematic structural diagram of a packet receiving device; and
FIG. 21 is a schematic structural diagram of a loopback device.

### DESCRIPTION OF EMBODIMENTS

For ease of understanding of technical solutions of this application, the following first briefly describes technologies related to this application.

### Service flow:

A service flow in the embodiments of this application includes a service aggregation flow and a service subflow. In a 4th generation (4th generation, 4G) or 4.5th generation (4.5th generation, 4.5G) network, a service aggregation flow includes a bearer or a packet data network (packet data network, PDN) connection, and a service subflow includes a specific service flow in the bearer. In a 5G network, a service aggregation flow includes a quality of service (quality of service, QoS) flow (Flow) or a packet data unit (packet data unit, PDU) session, and a service subflow includes a specific service flow in the QoS flow.

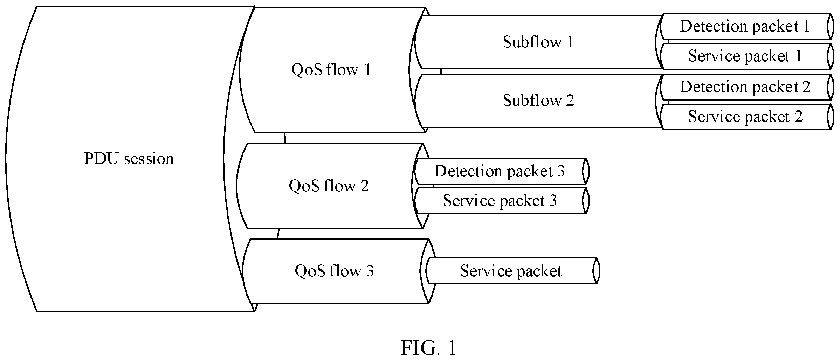

Using the 5G network as an example, as shown in FIG. 1, it is assumed that one PDU session includes three QoS flows: a QoS flow 1, a QoS flow 2, and a QoS flow 3. The QoS flow 1 includes a subflow 1 and a subflow 2. The subflow 1 and the subflow 2 correspond to different service flows. For example, the subflow 1 corresponds to a vehicle-to-everything (vehicle to everything communication, V2X) communication service flow 1, and the subflow 2 corresponds to a V2X service flow 2. In this case, the service aggregation flow in FIG. 1 includes the PDU session: the QoS flow 1, the QoS flow 2, and the QoS flow 3, and the service subflow includes the subflow 1 and the subflow 2. The service subflow or the service aggregation flow may be used to transmit a service packet and a detection packet. The service packet is specifically a user packet, namely, a packet transmitted through a network by a terminal or an application server to perform a service. The detection packet is specifically a packet used to detect quality of service of a service in a network. The detection packet is generated by a packet sending device or a packet transceiver device. The packet sending device or the packet transceiver device may be a terminal, an access device, or a user plane function (user plane function, UPF) network element in the 5G network; or may be a terminal, an access device, or a gateway user plane function (gateway user plane function, GW-U) network element in the 4.5G network; or may be a terminal, an access device, or a gateway (gateway, GW) in the 4G network, or the like. This is not specifically limited in the embodiments of this application. The following describes packet formats of the service packet and the detection packet.

### Session information of a service:

The detection packet provided in the embodiments of this application includes session information of a service, and the session information of the service is used to locate a specific service flow. The session information of the service carried in the detection packet when the detection packet is transmitted between a terminal and an access device may be different from the session information of the service carried in the detection packet when the detection packet is transmitted between an access device and a network device. This is not specifically limited in the embodiments of this application.

For example, in the 5G network, if the service flow is a PDU session or a QoS flow, when the detection packet is transmitted between the terminal and the access device, the session information of the service may include, for example, a quality of service flow identifier (QoS Flow identity, QFI). In other words, the detection packet and the service packet use the same QFI. Alternatively, the session information of the service may include, for example, a QFI and a radio bearer identifier. In other words, the detection packet and the service packet use the same QFI and radio bearer identifier.

In the 5G network, if the service flow is a PDU session or a QoS flow, when the detection packet is transmitted between the UPF network element and the access device, the session information of the service includes according to the invention a QFI and a tunnel endpoint identifier (tunnel endpoint identity, TEID). In other words, the detection packet and the service packet use the same QFI and TEID.

Alternatively, for example, in the 5G network, if the service flow is a specific service flow in a QoS flow, when the detection packet is transmitted between the terminal and the access device, the session information of the service may include, for example, a QFI and a 5-tuple. In other words, the detection packet and the service packet use the same QFI and 5-tuple. Alternatively, the session information of the service may include, for example, a 5-tuple, a QFI, and a radio bearer identifier. In other words, the detection packet and the service packet use the same 5-tuple, QFI, and radio bearer identifier. The 5-tuple in the embodiments of this application may include, for example, a source internet protocol (internet protocol, IP) layer address, a destination IP address, a source port number, a destination port number, and a transport layer protocol number. A general description is provided herein, and details are not described below again.

Alternatively, for example, in the 5G network, if the service flow is a specific service flow in a QoS flow, when the detection packet is transmitted between the UPF network element and the access device, the session information of the service may include, for example, a 5-tuple, a QFI, and a TEID. In other words, the detection packet and the service packet use the same 5-tuple, QFI, and TEID.

For example, in the 4G network or the 4.5G network, if the service flow is a PDN connection or a bearer, when the detection packet is transmitted between the terminal and the access device, the session information of the service may include, for example, a radio bearer identifier. In other words, the detection packet and the service packet use the same radio bearer identifier.

Alternatively, for example, if the service flow is a PDN connection or a bearer, when the detection packet is transmitted between the GW and the access device in the 4G network or between the GW-U network element and the access device in the 4.5G network, the session information of the service may include, for example, a TEID. In other words, the detection packet and the service packet use the same TEID.

Alternatively, for example, in the 4G network or the 4.5G network, if the service flow is a specific service flow in a bearer, when the detection packet is transmitted between the terminal and the access device, the session information of the service may include, for example, a 5-tuple. In other words, the detection packet and the service packet use the same 5-tuple. Alternatively, the session information of the service may include, for example, a 5-tuple and a radio bearer identifier. In other words, the detection packet and the service packet use the same 5-tuple and radio bearer identifier.

Alternatively, for example, if the service flow is a specific service flow in a bearer, when the detection packet is transmitted between the GW and the access device in the 4G network or between the GW-U network element and the access device in the 4.5G network, the session information of the service may include, for example, a 5-tuple and a TEID. In other words, the detection packet and the service packet use the same 5-tuple and TEID.

### Packet format:

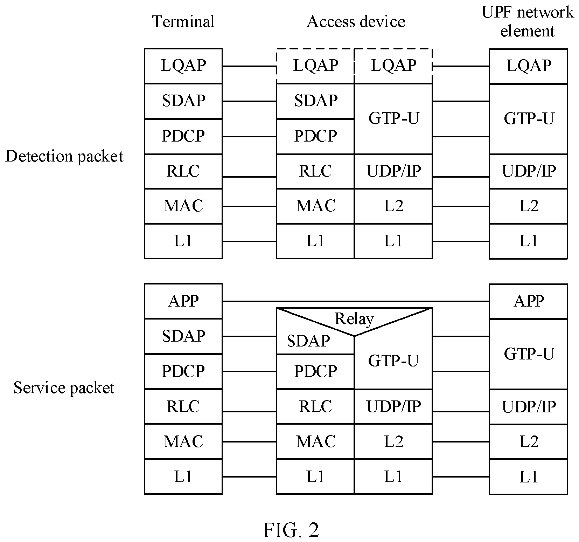

To detect quality of service of a service or segment quality of service of a service via the detection packet, the detection packet and the service packet in this application use a same 3GPP network protocol stack. Using the 5G network as an example, the following provides several examples of formats of the detection packet and the service packet, as shown in FIG. 2 to FIG. 4.

As shown in FIG. 2, for the detection packet and the service packet, a 3GPP network protocol stack between the terminal and the access device includes a service data adaptation protocol (service data adaptation protocol, SDAP) layer, a packet data convergence protocol (packet data convergence protocol, PDCP) layer, and lower-layer protocol layers. The lower-layer protocol layers include a radio link control (radio link control, RLC) layer, a media access control (media access control, MAC) layer and a layer 1 (level1, L1). A 3GPP network protocol stack between the access device and the UPF network element includes a general packet radio service technology (General Packet Radio Service, GPRS) tunneling protocol user plane (GPRS tunnelling protocol for the user plane, GTP-U) layer and lower-layer protocol layers, and the lower-layer protocol layers include a user datagram protocol (user datagram protocol, UDP) layer/IP layer, a layer 2 (level2, L2), and an L1. In addition, as shown in FIG. 2, a 3GPP network protocol stack and a link quality awareness protocol (link quality awareness protocol, LQAP) layer are included in a format of the detection packet; a 3GPP network protocol stack and an application (Application, APP) layer are included in a format of the service packet. In the embodiments of this application, for the service packet, the access device does not perceive the APP layer. Therefore, as shown in FIG. 2, the APP layer corresponds to a relay (relay) on an access device side, where the relay means forwarding or transparent transmission. For the detection packet, the access device may or may not perceive the LQAP layer. Therefore, as shown in FIG. 2, the LQAP layer is marked by dashed lines on the access device side. Certainly, if the access device does not perceive the LQAP layer, the LQAP layer may also be similar to the APP layer, and corresponds to a relay on the access device side. This is not specifically limited in the embodiments of this application. In addition, both the LQAP layer and the APP layer in the embodiments of this application may be considered as a load layer. A general description is provided herein, and details are not described below again.

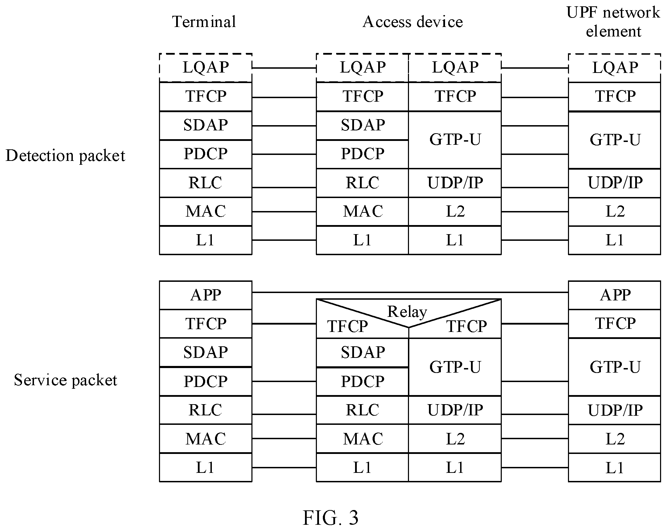

Formats of the detection packet and the service packet shown in FIG. 3 are similar to those in FIG. 2, and an only difference lies in the following: First, for the detection packet and the service packet, compared with the 3GPP network protocol stack between the terminal and the access device shown in FIG. 2, a 3GPP network protocol stack between the terminal and the access device shown in FIG. 3 additionally includes a traffic flow control protocol (transfer flow control protocol, TFCP) layer above the SDAP layer. Compared with the 3GPP network protocol stack between the UPF network element and the access device shown in FIG. 2, a 3GPP network protocol stack between the UPF network element and the access device shown in FIG. 3 additionally includes the TFCP layer above the GTP-U layer. Functions of the TFCP layer are described in detail in the following method embodiments, and details are not described herein again. Second, for the detection packet, the LQAP may be integrated into the TFCP layer. In other words, the LQAP layer may be optional. In FIG. 3, the LQAP layer is marked by dashed lines. A general description is provided herein, and details are not described below again. In addition, if the format of the detection packet shown in FIG. 3 includes the LQAP layer, as described in FIG. 2, the access device may or may not perceive the LQAP layer. This is not specifically limited in the embodiments of this application.

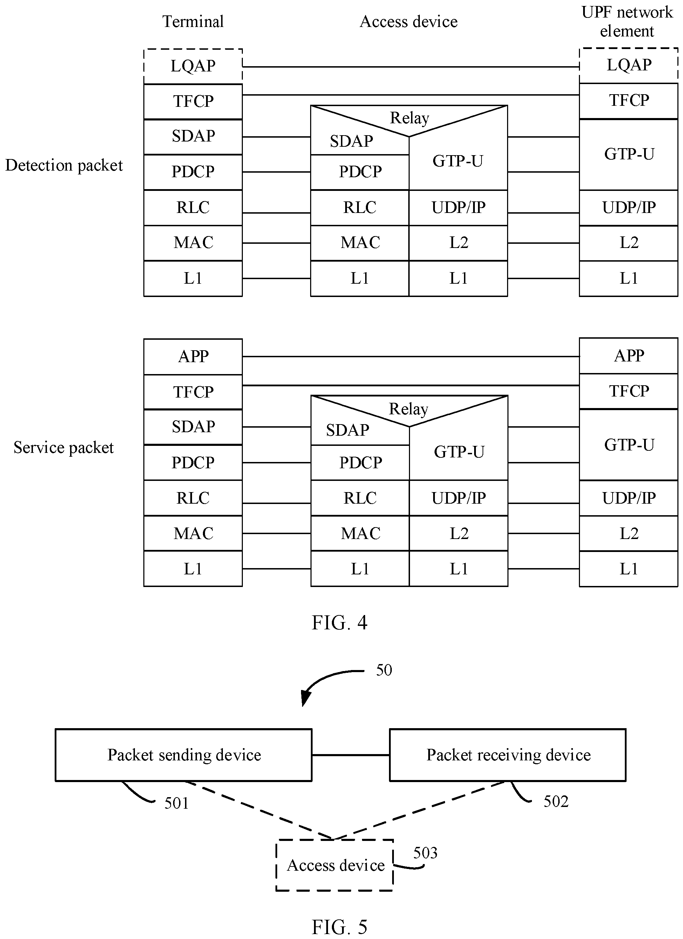

Formats of the detection packet and the service packet shown in FIG. 4 are similar to those in FIG. 3, and an only difference lies in the following: For the detection packet and the service packet, the access device in FIG. 3 perceives the TFCP layer, but the access device in FIG. 4 does not perceive the TFCP layer or the LQAP layer. As shown in FIG. 4, the TFCP layer corresponds to a relay on the access device side. A general description is provided herein, and details are not described below again.

Using the 5G network as an example, the foregoing provides several examples of formats of the detection packet and the service packet in descriptions of FIG. 2 to FIG. 4. In the 4G network or the 4.5G network, formats of the detection packet and the service packet are similar to those described in FIG. 2 to FIG. 4, and an only difference lies in that a 3GPP network protocol stack in the 4G network or the 4.5G network does not include the SDAP layer. For other parts included in the 3GPP network protocol stack, refer to descriptions in FIG. 2 to FIG. 4. Details are not described herein again.

It should be noted that in the embodiments of this application, because a same network protocol stack can ensure that a detection packet and a corresponding service packet use a same end-to-end pipeline resource, quality of service of a service can be detected via the detection packet. In the embodiments of this application, a service packet corresponding to a detection packet is a service packet that corresponds to a same service flow as the detection packet. For example, in FIG. 1, a service packet corresponding to a detection packet 1 is a service packet 1, and a service packet corresponding to a detection packet 2 is a service packet 2, and a service packet corresponding to a detection packet 3 is a service packet 3.

In addition, it should be noted that names of the LQAP and the TFCP in the embodiments of this application are merely examples, and the names do not constitute a limitation on the protocol. During specific implementation, other names may alternatively be used. This is not specifically limited in the embodiments of this application.

### Detection identifier:

The detection identifier in the embodiments of this application is used to indicate to detect quality of service of a service, or detect first segment quality of service of the service, or detect second segment quality of service of the service. In the embodiments of this application, the first segment quality of service of the service includes corresponding quality of service of the service transmitted on a path between the network device and the terminal. The second segment quality of service of the service includes corresponding quality of service of the service transmitted on a path between the access device and the terminal. In other words, in the embodiments of this application, a plurality of monitoring links may be established for one service pipeline (for example, one QoS flow), and are distinguished by different detection identifiers.

It should be noted that in the following embodiments of this application, because a context of the detection packet may be determined based on the detection identifier, the detection identifier may also be referred to as a context identifier of the packet. This is not specifically limited in the embodiments of this application.

In addition, it should be noted that, in the following embodiments of this application, for ease of description, descriptions are provided by using an example in which a first detection identifier is used to indicate to detect the quality of service of the service; a second detection identifier is used to indicate to detect corresponding quality of service of the service transmitted on the path between the terminal and the access device; a third detection identifier is used to indicate to detect corresponding quality of service of the service transmitted on a path between the network device and the access device. The network device may be, for example, the UPF network element in the 5G network, the GW-U network element in the 4.5G network, or the GW in the 4G network. A general description is provided herein, and details are not described below again.

The following describes the technical solutions in the embodiments of this application with reference to the accompanying drawings in the embodiments of this application. In description of this application, "/" means "or" unless otherwise specified. For example, A/B may represent A or B. In this specification, "and/or" describes only an association relationship for describing associated objects and indicates that three relationships may exist. For example, A and/or B may indicate the following three cases: Only A exists, both A and B exist, and only B exists. In addition, in the descriptions of this application, "a plurality of" means two or more, unless otherwise specified. In addition, to clearly describe the technical solutions in the embodiments of this application, the terms such as "first" and "second" are used in the embodiments of this application to distinguish between same items or similar items that have basically same functions and purposes. A person skilled in the art may understand that the terms such as "first" and "second" do not limit a quantity or an execution sequence, and the terms such as "first" and "second" do not indicate a definite difference.

In addition, the network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

FIG. 5 shows a system 50 for detecting quality of service of a service according to an embodiment of this application. The system 50 for detecting quality of service of a service includes a packet sending device 501 and a packet receiving device 502.

The packet sending device 501 is configured to send a first packet to the packet receiving device 502, where the first packet includes session information of a service and a packet type of the first packet.

The packet receiving device 502 is configured to: receive the first packet from the packet sending device 501, and determine at least one of quality of service of the service or segment quality of service of the service based on the session information of the service and the packet type of the first packet.

Optionally, the service in this embodiment of this application is specifically a service corresponding to the foregoing service flow, for example, a service corresponding to a service aggregation flow or a service corresponding to a service subflow. A general description is provided herein, and details are not described below again. For related descriptions of the session information of the service, refer to the foregoing brief introduction part. Details are not described herein again.

Optionally, in this embodiment of this application, the packet type of the first packet includes the foregoing detection packet type, another type used to indicate that the first packet is a detection packet, or the like. A general description is provided herein, and details are not described below again.

Optionally, in this embodiment of this application, the packet sending device 501 and the packet receiving device 502 may directly communicate with each other, or may communicate with each other through forwarding by another device. This is not specifically limited in this embodiment of this application.

In the prior art, the quality of service of the service can be detected only through a delayed ACK mechanism. However, according to the system for detecting quality of service of a service provided in this embodiment of this application, the packet sending device may send the first packet including the session information of the service and the packet type of the first packet to the packet receiving device. After receiving the first packet, the packet receiving device may determine at least one of the quality of service of the service or the segment quality of service of the service based on the session information of the service and the packet type of the first packet. Therefore, based on the solution, at least one of the quality of service of the service or the segment quality of service of the service can be detected in real time.

Optionally, in this embodiment of this application, the packet sending device 501 may include a network device, and the packet receiving device 502 may include a terminal. Correspondingly, as shown in FIG. 5, the system 50 for detecting quality of service of a service provided in this embodiment of this application may further include an access device 503.

The access device 503 is configured to: receive the first packet from the network device, and determine first segment quality of service of the service, where the first segment quality of service of the service includes corresponding quality of service of the service transmitted on a path between the access device and the network device.

The access device 503 is further configured to: insert first segment information of the service and the first segment quality of service of the service into the first packet, and send the first packet to the terminal.

Alternatively, optionally, in this embodiment of this application, the packet sending device 501 may include a terminal, and the packet receiving device 502 may include a network device. Correspondingly, as shown in FIG. 5, the system 50 for detecting quality of service of a service provided in this embodiment of this application may further include an access device 503.

The access device 503 is configured to: receive the first packet from the terminal, and determine second segment quality of service of the service, where the second segment quality of service of the service includes corresponding quality of service of the service transmitted on a path between the access device and the terminal.

The access device 503 is further configured to: insert second segment information of the service and the second segment quality of service of the service into the first packet, and send the first packet to the network device.

In other words, in this embodiment of this application, the packet sending device and the packet receiving device may communicate with each other via the access device, and the access device may insert the segment quality of service of the service into the first packet. This is not specifically limited in this embodiment of this application.

After receiving the first packet sent by the packet sending device, the access device may determine the segment quality of service of the service, insert the segment quality of service of the service into the first packet, and send the first packet to the packet receiving device. Therefore, after receiving the first packet, the packet receiving device can determine the quality of service of the service and one piece of segment quality of service, and then can determine another piece of segment quality of service based on the quality of service of the service and the one piece of segment quality of service. In other words, based on the solution, the quality of service of the service and the segment quality of service of the service can be detected in real time.

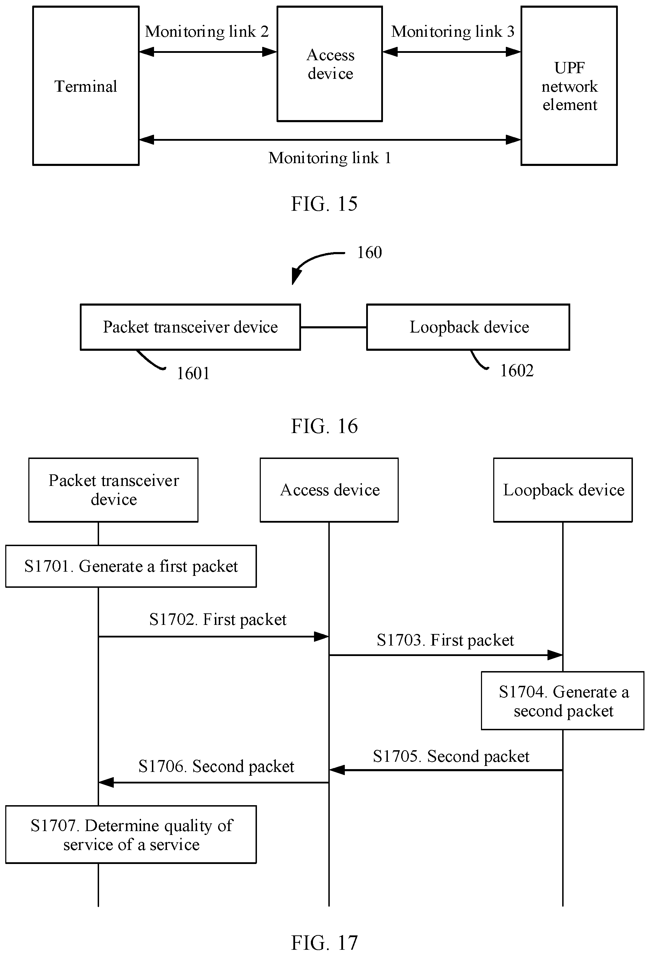

Optionally, FIG. 16 shows a system 160 for detecting quality of service of a service according to an embodiment of this application. The system 160 for detecting quality of service of a service includes a packet transceiver device 1601 and a loopback device 1602.

The packet transceiver device 1601 is configured to send a first packet to the loopback device 1602, where the first packet includes first session information of a service, a packet type of the first packet, and a loopback indication.

The loopback device 1602 is configured to: receive the first packet from the packet transceiver device 1601, and send a second packet to the packet transceiver device 1601, where the second packet includes second session information of the service, a packet type of the second packet, and the loopback indication, and the packet type of the second packet is the same as the packet type of the first packet.

The packet transceiver device 1601 is further configured to: receive the second packet from the loopback device 1602, and determine quality of service of the service or segment quality of service of the service based on the second session information of the service, the packet type of the second packet, and the loopback indication.

For related descriptions of the first session information of the service and the second session information of the service, refer to the foregoing brief introduction part. Details are not described herein again.

It should be noted that in this embodiment of this application, the first session information and the second session information are used to distinguish between different session information. This is because the foregoing brief introduction part of the session information of the service mentions that, the first session information of the service and the second session information of the service may include different TEIDs or radio bearer identifiers. A general description is provided herein, and details are not described below again.

Optionally, in this embodiment of this application, the packet transceiver device 1601 and the loopback device 1602 may directly communicate with each other, or may communicate with each other through forwarding by another device. This is not specifically limited in this embodiment of this application.

In the prior art, the quality of service of the service can be detected only through a delayed ACK mechanism. However, according to the system for detecting quality of service of a service provided in this embodiment of this application, the packet transceiver device may send the first packet to the loopback device. After receiving the first packet, the loopback device may send the second packet including the second session information of the service, the packet type of the second packet, and the loopback indication to the packet transceiver device. Then, after receiving the second packet, the packet transceiver device may determine the quality of service of the service or the segment quality of service of the service based on the second session information of the service, the packet type of the second packet, and the loopback indication. Therefore, based on the solution, the quality of service of the service or the segment quality of service of the service can be detected in real time.

Optionally, the system 50 for detecting quality of service of a service shown in FIG. 5 or the system 160 for detecting quality of service of a service shown in FIG. 16 may be applied to a current 4G network, a 4.5G network, a 5G network, and another network in the future. This is not specifically limited in the embodiments of this application.

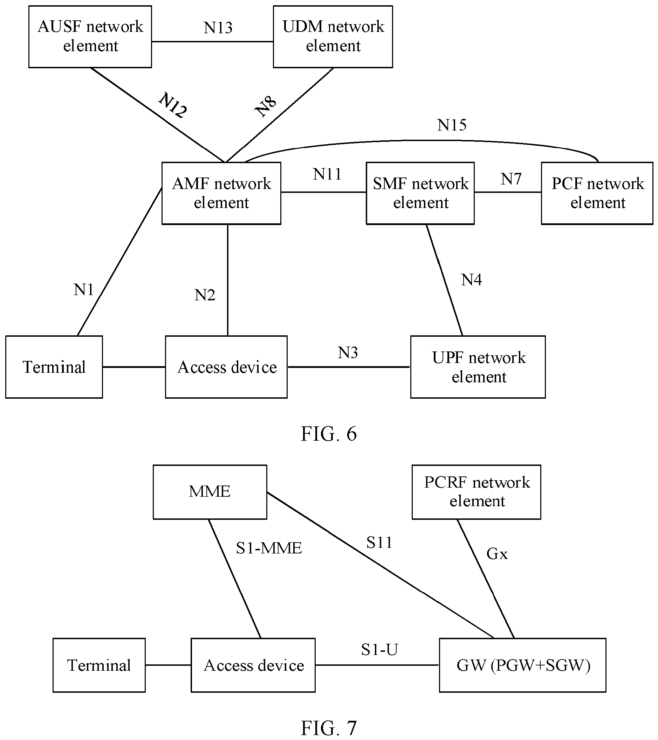

For example, it is assumed that the system 50 for detecting quality of service of a service shown in FIG. 5 is applied to a current 5G network. As shown in FIG. 6, the packet sending device 501 may be a terminal in the 5G network, and the packet receiving device 502 may be an access device or a UPF network element in the 5G network. Alternatively, the packet sending device 501 may be an access device in the 5G network, and the packet receiving device 502 may be a terminal or a UPF network element in the 5G network. Alternatively, the packet sending device 501 may be a UPF network element in the 5G network, and the packet receiving device 502 may be an access device or a terminal in the 5G network. In the foregoing cases, a network element or an entity corresponding to the network device may be a UPF network element in the 5G network.

Alternatively, it is assumed that the system 50 for detecting quality of service of a service shown in FIG. 16 is applied to a current 5G network. As shown in FIG. 6, the packet transceiver device 1601 may be a terminal in the 5G network, and the loopback device 1602 may be an access device or a UPF network element in the 5G network. Alternatively, the packet transceiver device 1601 may be an access device in the 5G network, and the loopback device 1602 may be a terminal or a UPF network element in the 5G network. Alternatively, the packet transceiver device 1601 may be a UPF network element in the 5G network, and the loopback device 1602 may be an access device or a terminal in the 5G network.

In addition, as shown in FIG. 6, the 5G network may further include a session management function (session management function, SMF) network element, a policy control function (policy control function, PCF) network element, a unified data management (unified data management, UDM) network element, an authentication server function (authentication server function, AUSF) network element, an access and mobility management function (Access and Mobility Management Function, AMF) network element, and the like. This is not specifically limited in this embodiment of this application.

The terminal communicates with the AMF network element through a next generation (Next generation, N) interface 1 (N1 for short). The access device communicates with the AMF network element through an N interface 2 (N2 for short). The access device communicates with the UPF network element through an N interface 3 (N3 for short). The AMF network element communicates with the SMF network element through an N interface 11 (N11 for short). The AMF network element communicates with the UDM network element through an N interface 8 (N8 for short). The AMF network element communicates with the AUSF network element through an N interface 12 (N12 for short). The AMF network element communicates with the PCF network element through an N interface 15 (N15 for short). The SMF network element communicates with the PCF network element through an N interface 7 (N7 for short). The SMF network element communicates with the UPF network element through an N interface 4 (N4 for short).

In addition, the UDM network element, the AUSF network element, the PCF network element, the AMF network element, and the SMF network element in FIG. 6 may be collectively referred to as a control plane function (control plane function, CPF) network element. This is not specifically limited in this embodiment of this application.

It should be noted that, names of the interfaces between network elements in FIG. 6 are merely examples, and the interfaces may have other names during specific implementation. This is not specifically limited in this embodiment of this application.

It should be noted that the access device, the AMF network element, the SMF network element, the AUSF network element, the UDM network element, the UPF network element, the PCF network element, and the like in FIG. 6 are merely names, and the names do not constitute any limitation on the devices. In the 5G network and another network in the future, network elements or entities corresponding to the access device, the AMF network element, the SMF network element, the AUSF network element, the UDM network element, the UPF network element, and the PCF network element may have other names. This is not specifically limited in this embodiment of this application. For example, the UDM network element may alternatively be replaced by a home subscriber server (home subscriber server, HSS), a user subscription database (user subscription database, USD), a database entity, or the like. A general description is provided herein, and details are not described below again.

Optionally, it is assumed that the system 50 for detecting quality of service of a service shown in FIG. 5 is applied to a current 4G network. As shown in FIG. 7, the packet sending device 501 may be a terminal in the 4G network, and the packet receiving device 502 may be an access device or a GW in the 4G network. Alternatively, the packet sending device 501 may be an access device in the 4G network, and the packet receiving device 502 may be a terminal or a GW in the 4G network. Alternatively, the packet sending device 501 may be a GW in the 4G network, and the packet receiving device 502 may be a terminal or an access device in the 4G network. In the foregoing cases, a network element or an entity corresponding to the network device may be a GW in the 4G network.

Alternatively, it is assumed that the system 160 for detecting quality of service of a service shown in FIG. 16 is applied to a current 4G network. As shown in FIG. 7, the packet transceiver device 1601 may be a terminal in the 5G network, and the loopback device 1602 may be an access device or a GW in the 5G network. Alternatively, the packet transceiver device 1601 may be an access device in the 5G network, and the loopback device 1602 may be a terminal or a GW in the 5G network. Alternatively, the packet transceiver device 1601 may be a GW in the 5G network, and the loopback device 1602 may be an access device or a terminal in the 5G network.

In addition, as shown in FIG. 7, the 4G network may further include a mobility management entity (mobility management entity, MME), a policy and charging rules function (policy and charging rules function, PCRF) network element, and the like. The GW integrates functions of a PDN gateway (PDN gateway, PGW) and a serving gateway (serving gateway, SGW). For details, refer to an existing 4G network architecture. Details are not described in this embodiment of this application.

The access device communicates with the GW through an S1-U interface, the access device communicates with the MME through an S 1-MME interface, the MME communicates with the GW through an S11 interface, and the PCRF entity communicates with the GW through a Gx interface.

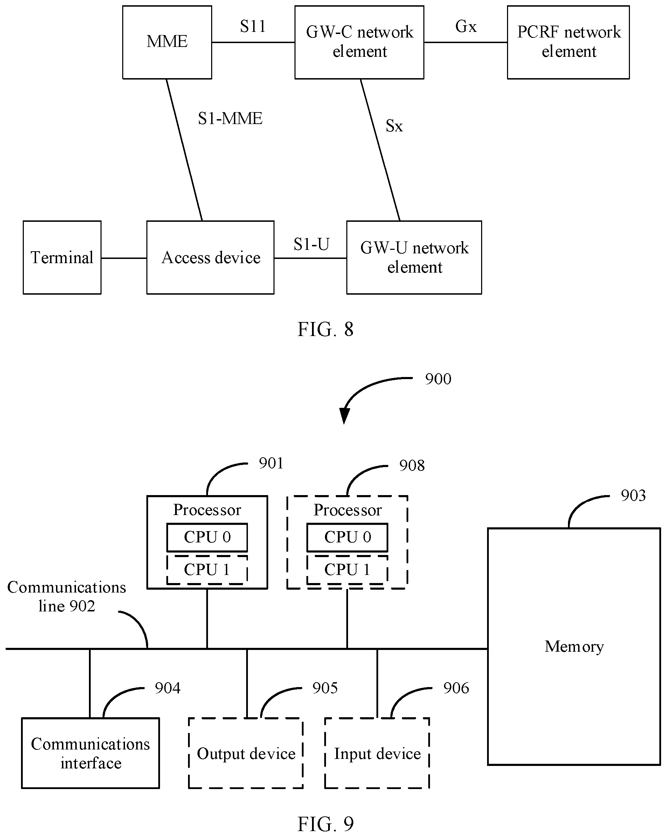

Optionally, it is assumed that the system 50 for detecting quality of service of a service shown in FIG. 5 is applied to a current 4.5G network. As shown in FIG. 8, the packet sending device 501 may be a terminal in the 4.5G network, and the packet receiving device 502 may be an access device or a GW-U network element in the 4.5G network. Alternatively, the packet sending device 501 may be an access device in the 4.5G network, and the packet receiving device 502 may be a terminal or a GW-U network element in the 4.5G network. Alternatively, the packet sending device 501 may be a GW-U network element in the 4.5G network, and the packet receiving device 502 may be a terminal or an access device in the 4.5G network. In the foregoing cases, a network element or entity corresponding to the network device may be a GW-U network element in the 5G network.

Alternatively, it is assumed that the system 160 for detecting quality of service of a service shown in FIG. 16 is applied to a current 5G network. As shown in FIG. 8, the packet transceiver device 1601 may be a terminal in the 5G network, and the loopback device 1602 may be an access device or a GW-U network element in the 5G network. Alternatively, the packet transceiver device 1601 may be an access device in the 5G network, and the loopback device 1602 may be a terminal or a GW-U network element in the 5G network. Alternatively, the packet transceiver device 1601 may be a GW-U network element in the 5G network, and the loopback device 1602 may be an access device or a terminal in the 5G network.

In addition, as shown in FIG. 8, the 4.5G network may further include an MME, a gateway control plane function (gateway control plane function, GW-C) network element, a PCRF network element, and the like. For details, refer to an existing 4.5G network architecture. Details are not described in this embodiment of this application.

The access device communicates with the GW-U network element through an S1-U interface, the access device communicates with the MME through an S1-MME interface, the MME communicates with the GW-C network element through an S11 interface, the GW-C network element communicates with the GW-U network element through an Sx interface, and the PCRF network element communicates with the GW-C network element through a Gx interface.

Optionally, a terminal (terminal) in the embodiments of this application may include various handheld devices, vehicle-mounted devices, wearable devices, and computing devices that have a wireless communication function, or other processing devices connected to a wireless modem. The terminal may further include a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone) or a wireless local loop (wireless local loop, WLL) station, a machine type communication (machine type communication, MTC) terminal, user equipment (user equipment, UE), a mobile station (mobile station, MS), a terminal device (terminal device), or the like. For ease of description, the devices mentioned above are collectively referred to as terminals in this application.

Optionally, the access device in the embodiments of this application is a device that accesses a core network, for example, a base station, a broadband network gateway (broadband network gateway, BNG), an aggregation switch, or a non-3rd generation partnership project (3rd generation partnership project, 3GPP) access device. The base station may include base stations in various forms, for example, a macro base station, a micro base station (also referred to as a small cell), a relay station, and an access point.

Optionally, the packet sending device or the packet receiving device in FIG. 5 or the loopback device in FIG. 16 in the embodiments of this application may be implemented by one device, or may be implemented by a plurality of devices, or may be a function module in one device. This is not specifically limited in the embodiments of this application. It may be understood that the foregoing functions may be network elements in a hardware device, or may be software functions running on dedicated hardware, or may be virtualization functions instantiated on a platform (for example, a cloud platform).

For example, the packet sending device or the packet receiving device in FIG. 5 or the loopback device in FIG. 16 in the embodiments of this application may be implemented by a communications device in FIG. 9. FIG. 9 is a schematic diagram of a hardware structure of a communications device according to an embodiment of this application. The communications device 900 includes at least one processor 901, a communications line 902, a memory 903, and at least one communications interface 904.

The processor 901 may be a general-purpose central processing unit (central processing unit, CPU), a microprocessor, an application-specific integrated circuit (application-specific integrated circuit, ASIC), or one or more integrated circuits for controlling program execution of the solutions of this application.

The communications line 902 may include a path, to transfer information between the foregoing components.

The communications interface 904 uses any apparatus such as a transceiver, to communicate with another device or communications network such as the Ethernet, a radio access network (radio access network, RAN), or a wireless local area network (wireless local area networks, WLAN).

The memory 903 may be a read-only memory (read-only memory, ROM) or another type of static storage device that can store static information and an instruction, a random access memory (random access memory, RAM) or another type of dynamic storage device that can store information and an instruction; or may be an electrically erasable programmable read-only memory (electrically erasable programmable read-only memory, EEPROM), a compact disc read-only memory (compact disc read-only memory, CD-ROM), or another compact disc storage, optical disc storage (including a compact disc, a laser disc, an optical disc, a digital versatile disc, a Blu-ray disc, or the like), and a disk storage medium or another disk storage device, or any other medium that can be used to carry or store expected program code in a form of an instruction or data structure and that can be accessed by a computer. However, the memory 903 is not limited thereto. The memory may exist independently, and is connected to the processor through the communications line 902. Alternatively, the memory may be integrated with the processor.

The memory 903 is configured to store a computer-executable instruction for executing the solutions in this application, and the processor 901 controls the execution of the computer-executable instruction. The processor 901 is configured to execute the computer-executable instruction stored in the memory 903, to implement a method for detecting quality of service of a service provided in the following embodiment of this application.

Optionally, the computer-executable instruction in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communications device 900 may include a plurality of processors, for example, the processor 901 and a processor 908 in FIG. 9. The processors each may be a single-core (single-CPU) processor or a multi-core (multi-CPU) processor. The processor herein may refer to one or more devices, circuits, and/or processing cores configured to process data (for example, a computer program instruction).

During specific implementation, in an embodiment, the communications device 900 may further include an output device 905 and an input device 906. The output device 905 communicates with the processor 901, and may display information in a plurality of manners. For example, the output device 905 may be a liquid crystal display (liquid crystal display, LCD), a light emitting diode (light emitting diode, LED) display device, a cathode ray tube (cathode ray tube, CRT) display device, a projector (projector), or the like. The input device 906 communicates with the processor 901, and may receive an input of a user in a plurality of manners. For example, the input device 906 may be a mouse, a keyboard, a touchscreen device, or a sensing device.

The communications device 900 may be a general-purpose device or a dedicated device. During specific implementation, the communications device 900 may be a desktop computer, a portable computer, a network server, a palmtop computer (personal digital assistant, PDA), a mobile phone, a tablet computer, a wireless terminal device, an embedded device, or a device with a structure similar to the structure in FIG. 9. A type of the communications device 900 is not limited in this embodiment of this application.

The following specifically describes, with reference to FIG. 1 to FIG. 9 and FIG. 16, the method for detecting quality of service of a service provided in the embodiments of this application.

It should be noted that, in the following embodiments of this application, names of messages or names of parameters in messages between network elements are merely examples, and the messages or the parameters may have other names during specific implementation. This is not specifically limited in the embodiments of this application.

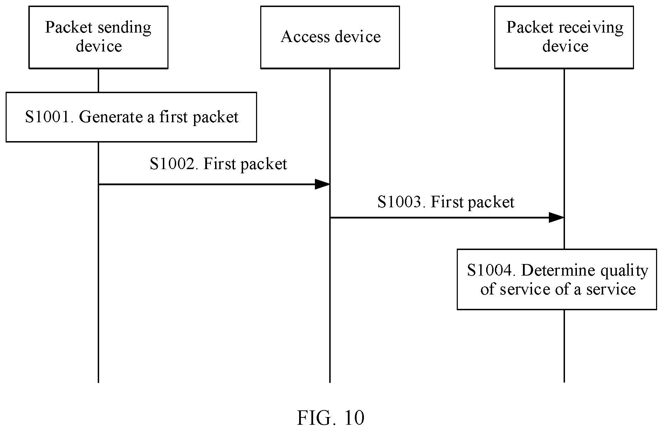

For example, the system 50 for detecting quality of service of a service shown in FIG. 5 is applied to the 5G network shown in FIG. 6. FIG. 10 shows a method for detecting quality of service of a service according to an embodiment of this application. The method for detecting quality of service of a service is applicable to a scenario in which an access device does not process a detection packet, and includes the following steps.

S1001. A packet sending device generates a first packet, where the first packet includes session information of a service and a packet type of the first packet.

For related descriptions of the session information of the service, refer to the foregoing brief introduction part. For related descriptions of the packet type of the first packet, refer to the embodiment shown in FIG. 5. Details are not described herein again.

Optionally, in this embodiment of this application, the generating, by a packet sending device, a first packet may specifically include: obtaining, by the packet sending device, the session information of the service and the packet type of the first packet; and then encapsulating, by the packet sending device, the session information of the service and the packet type of the first packet by using a first network protocol stack, to obtain the first packet.

Case 1: When the packet sending device is a terminal, and a packet receiving device is a UPF network element:

In a possible implementation, the first network protocol stack may be a 3GPP network protocol stack shown in FIG. 2 that is between the terminal and the access device and that is corresponding to the detection packet. In this case, correspondingly, the session information of the service is encapsulated by using at least one of an SDAP or a PDCP in the first network protocol stack, and the packet type of the first packet is encapsulated by using the SDAP in the first network protocol stack. In addition, this embodiment of this application is applicable to the scenario in which the access device does not process a detection packet. Therefore, the access device does not perceive an LQAP layer.

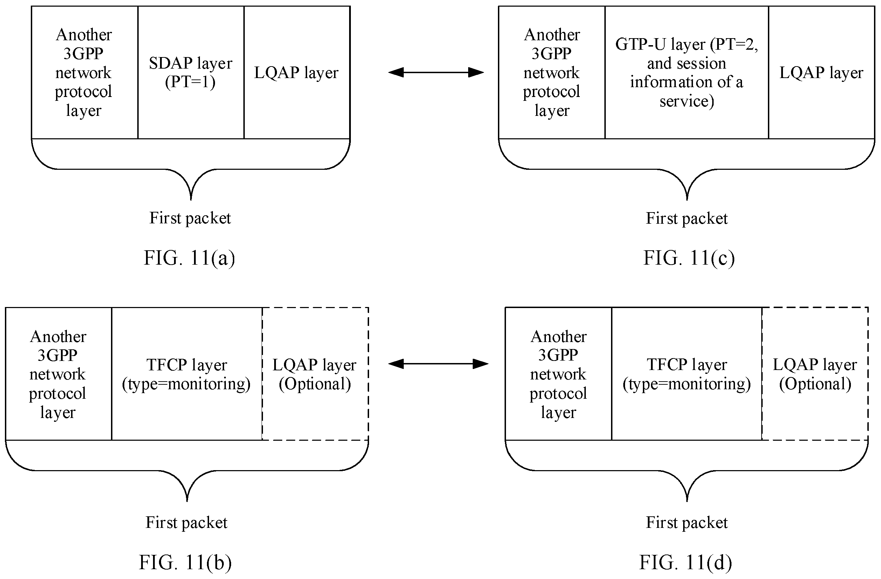

For example, a format of the first packet may be shown in FIG. 11(a), including an SDAP layer, the LQAP layer, and a 3GPP network protocol layer other than the SDAP layer. The SDAP layer includes the packet type of the first packet, and a payload type (payload type, PT)=1 is used to indicate that the packet type of the first packet is a detection packet. Certainly, PT=1 is merely an example, and another value may also be used to indicate that the packet type of the first packet is a detection packet. This is not specifically limited in this embodiment of this application. In addition, the session information of the service may be included in the SDAP layer, or may be included in a PDCP layer in 3GPP network protocol layers, or may be included in the SDAP layer and a PDCP layer in 3GPP network protocol layers. This is not specifically limited in this embodiment of this application.

Certainly, if the system 50 for detecting quality of service of a service shown in FIG. 5 is applied to the 4G network shown in FIG. 7 or the 4.5G network shown in FIG. 8, because the 4G network or the 4.5G network does not support the SDAP, the session information of the service and the packet type of the first packet may be encapsulated by using the PDCP in the first network protocol stack. This is not specifically limited in this embodiment of this application.

In another possible implementation, because this embodiment of this application is applicable to the scenario in which the access device does not process a detection packet, the first network protocol stack may be a 3GPP network protocol stack shown in FIG. 4 that is between the terminal and the access device and that is corresponding to the detection packet. In this case, correspondingly, the session information of the service is encapsulated by using at least one of an SDAP or a PDCP in the first network protocol stack, and the packet type of the first packet is encapsulated by using a TFCP in the first network protocol stack. Alternatively, the session information of the service and the packet type of the first packet are encapsulated by using a TFCP in the first network protocol stack.

For example, a format of the first packet may be shown in FIG. 11(b), including a TFCP layer, the LQAP layer (optional), a 3GPP network protocol layer other than the TFCP layer. The TFCP layer includes the packet type of the first packet, and type=monitoring (monitoring) is used to indicate that the packet type of the first packet is a detection packet. Certainly, type=monitoring (monitoring) is merely an example in which the packet type of the first packet is explicitly indicated at the TFCP layer, and another form in which the packet type of the first packet is explicitly indicated may be used to indicate that the packet type of the first packet is a detection packet. This is not specifically limited in this embodiment of this application. Certainly, the packet type of the first packet may alternatively be implicitly indicated at the TFCP layer, to be specific, the packet type of the first packet is determined by associating a field at the TFCP layer with other information. For example, when a service packet and the detection packet are encapsulated by using the 3GPP network protocol stack shown in FIG. 4, as shown in FIG. 11(b), different IDs may be used at the TFCP layer to distinguish between the service packet and the detection packet. For example, a TFCP ID of the service packet is 1, a TFCP ID of the detection packet is 2, and the terminal and the UPF network element store context information corresponding to TFCP IDs, where the context information corresponding to the TFCP ID of 1 indicates that the packet is the service packet, and the context information corresponding to the TFCP ID of 2 indicates that the packet is a detection packet. An indication form of the packet type of the first packet is not specifically limited in this embodiment of this application. In addition, the session information of the service may be included in the TFCP layer, or may be included in the PDCP layer in 3GPP network protocol layers, or may be included in the SDAP layer in 3GPP network protocol layers, or may be included in the SDAP layer and the PDCP layer in 3GPP network protocol layers. This is not specifically limited in this embodiment of this application.

It should be noted that, when the format of the first packet includes the TFCP layer, because the TFCP layer includes the packet type of the first packet, a PT of the SDAP layer in the 3GPP network protocol layers does not need to be identified. A general description is provided herein, and details are not described below again.

Case 2: When the packet sending device is a UPF network element, and the packet receiving device is a terminal:

In a possible implementation, the first network protocol stack may be a 3GPP network protocol stack shown in FIG. 2 that is between the UPF network element and the access device and that is corresponding to the detection packet. In this case, correspondingly, the session information of the service and the packet type of the first packet are encapsulated by using a GTP-U in the first network protocol stack. In addition, this embodiment of this application is applicable to the scenario in which the access device does not process a detection packet. Therefore, the access device does not perceive an LQAP.

For example, the format of the first packet may be shown in FIG. 11(c), including a GTP-U layer, an LQAP layer, and a 3GPP network protocol layer other than the GTP-U layer. The GTP-U layer includes the packet type of the first packet and the session information of the service. PT=1 is used to indicate that the packet type of the first packet is a detection packet. Certainly, PT=1 is merely an example, and another value may alternatively be used to indicate that the packet type of the first packet is a detection packet. This is not specifically limited in this embodiment of this application.

In another possible implementation, because this embodiment of this application is applicable to the scenario in which the access device does not process a detection packet, the first network protocol stack may be a 3GPP network protocol stack shown in FIG. 4 that is between the UPF network element and the access device and that is corresponding to the detection packet. In this case, correspondingly, the session information of the service is encapsulated by using a GTP-U in the first network protocol stack, and the packet type of the first packet is encapsulated by using a TFCP in the first network protocol stack. Alternatively, the session information of the service and the packet type of the first packet are encapsulated by using a TFCP in the first network protocol stack.

For example, the format of the first packet may be shown in FIG. 11(d), including a TFCP layer, an LQAP layer (optional), and a 3GPP network protocol layer other than the TFCP layer. The TFCP layer includes the packet type of the first packet, and type=monitoring (monitoring) is used to indicate that the packet type of the first packet is a detection packet. Certainly, type=monitoring (monitoring) is merely an example, and another form may be used to indicate that the packet type of the first packet is a detection packet. For example, as shown in FIG. 11(b) in Case 1, the packet type of the first packet is determined by associating a field at the TFCP layer with other information. This is not specifically limited in this embodiment of this application. In addition, the session information of the service may be included in the TFCP layer or the GTP-U layer in 3GPP network protocol layers. This is not specifically limited in this embodiment of this application.

Optionally, in this embodiment of this application, the first packet may further include a sending periodicity of the first packet. For example, the sending periodicity of the first packet may be 2 ms.

Optionally, in this embodiment of this application, the first packet may further include a first detection identifier, and the first detection identifier is used to indicate to detect quality of service of a service. This is not specifically limited in this embodiment of this application.

Certainly, the first packet may further include another parameter, for example, a sending moment or a sequence number. This is not specifically limited in this embodiment of this application.

Optionally, the first detection identifier, the sending periodicity of the first packet, the sending moment, the sequence number, or other information may be collectively referred to as detection information. The detection information may be encapsulated by using the LQAP in FIG. 2 or FIG. 4, or may be encapsulated by using the TFCP in FIG. 4. This is not specifically limited in this embodiment of this application. When the detection information is encapsulated by using the LQAP in FIG. 2 or FIG. 4, the first detection identifier in this embodiment of this application may be represented, for example, by an LQAP ID. When the detection information is encapsulated by using the TFCP in FIG. 4, the first detection identifier in this embodiment of this application may be represented, for example, by using a TFCP ID. This is not specifically limited in this embodiment of this application.

Optionally, in this embodiment of this application, the packet sending device may be triggered by a PCF network element to generate the first packet, or the packet sending device may be triggered by an SMF network element generate the first packet, or the packet sending device may initiate generation of the first packet, and so on. This is not specifically limited in this embodiment of this application. When the packet sending device is triggered by the PCF network element to generate the first packet, the detection information may be determined by at least one of the PCF network element, the SMF network element, or the packet sending device. When the packet sending device is triggered by the SMF network element to generate the first packet, the detection information may be determined by at least one of the SMF network element or the packet sending device. When the packet sending device initiates generation of the first packet, the detection information may be determined by the packet sending device. This is not specifically limited in this embodiment of this application.

S1002. The packet sending device sends the first packet to the access device, and the access device receives the first packet from the packet sending device.

S1003. The access device sends the first packet to the packet receiving device, and the packet receiving device receives the first packet from the access device.

It should be noted that in this embodiment of this application, packets having a same detection identifier are considered as one detection packet. However, in this embodiment of this application, the first packet transmitted between the packet sending device and the access device and the first packet transmitted between the access device and the packet receiving device are encapsulated by using different network protocol stacks. In other words, in this embodiment of this application, after receiving the first packet, the access device parses the first packet to obtain the session information of the service and the packet type of the first packet, re-encapsulates the session information of the service and the packet type of the first packet by using a second network protocol stack, to obtain the re-encapsulated first packet, and sends the first packet to the packet receiving device.

Case 1: When the packet sending device is a terminal, and the packet receiving device is a UPF network element:

If the first network protocol stack in step S1001 is the 3GPP network protocol stack shown in FIG. 2 that is between the terminal and the access device and that is corresponding to the detection packet, correspondingly, the second network protocol stack in this embodiment of this application may be the 3GPP network protocol stack shown in FIG. 2 that is between the UPF network element and the access device and that is corresponding to the detection packet. In this case, specifically, the session information of the service and the packet type of the first packet are encapsulated by using a GTP-U in the second network protocol stack.

For example, the format of the first packet may be shown in FIG. 1 1(c). For related descriptions, refer to the descriptions in FIG. 11(c). Details are not described herein again.

It should be noted that, if the first packet is encapsulated by using the 3GPP network protocol stack shown in FIG. 2, packet type identification needs to be performed on an access device side. The reason is that the packet type of the first packet transmitted between the terminal and the access device and the packet type of the first packet transmitted between the access device and the UPF network element are in the SDAP layer and the GTP-U layer respectively, and PT values, used to indicate that the packet is a detection packet, defined in the different protocols may be different. A general description is provided herein, and details are not described below again.

If the first network protocol stack in step S1001 is the 3GPP network protocol stack shown in FIG. 4 that is between the terminal and the access device and that is corresponding to the detection packet, correspondingly, the second network protocol stack in this embodiment of this application may be the 3GPP network protocol stack shown in FIG. 4 that is between the UPF network element and the access device and that is corresponding to the detection packet. In this case, specifically, the session information of the service is encapsulated by using the GTP-U in the second network protocol stack, and the packet type of the first packet is encapsulated by using a TFCP in the second network protocol stack. Alternatively, the session information of the service and the packet type of the first packet are encapsulated by using a TFCP in the second network protocol stack.

For example, the format of the first packet may be shown in FIG. 1 1(d). For related descriptions, refer to the descriptions in FIG. 11(d). Details are not described herein again.

It should be noted that, if the first packet is encapsulated by using the 3GPP network protocol stack shown in FIG. 4, packet type identification does not need to be performed on the access device side. The reason is that the packet type of the first packet transmitted between the terminal and the access device and the packet type of the first packet transmitted between the access device and the UPF network element are stored at TFCP layers, and forms, defined in the same protocol, used to indicate that the packet is a detection packet are the same. A general description is provided herein, and details are not described below again.

Case 2: When the packet sending device is a UPF network element, and the packet receiving device is a terminal:

If the first network protocol stack in step S 1001 is the 3GPP network protocol stack shown in FIG. 2 that is between the UPF network element and the access device and that is corresponding to the detection packet, correspondingly, the second network protocol stack in this embodiment of this application may be the 3GPP network protocol stack shown in FIG. 2 that is between the terminal and the access device and that is corresponding to the detection packet. In this case, specifically, the session information of the service is encapsulated by using at least one of an SDAP or a PDCP in the second network protocol stack, and the packet type of the first packet is encapsulated by using the SDAP in the second network protocol stack.

For example, the format of the first packet may be shown in FIG. 11(a). For related descriptions, refer to the descriptions in FIG. 11(a). Details are not described herein again.

If the first network protocol stack in step S 1001 is the 3GPP network protocol stack shown in FIG. 4 that is between the UPF network element and the access device and that is corresponding to the detection packet, correspondingly, the second network protocol stack in this embodiment of this application may be the 3GPP network protocol stack shown in FIG. 4 that is between the terminal and the access device and that is corresponding to the detection packet. In this case, specifically, the session information of the service is encapsulated by using at least one of the SDAP or the PDCP in the second network protocol stack, and the packet type of the first packet is encapsulated by using the TFCP in the second network protocol stack. Alternatively, the session information of the service and the packet type of the first packet are encapsulated by using the TFCP in the second network protocol stack.

For example, the format of the first packet may be shown in FIG. 11(b). For related descriptions, refer to the descriptions in FIG. 11(b). Details are not described herein again.

In addition, it should be noted that in this embodiment of this application, the first packet transmitted between the packet sending device and the access device and the first packet transmitted between the access device and the packet receiving device may include different session information of the service. To be specific, in this embodiment of this application, after receiving the first packet from the packet sending device and before sending the first packet to the packet receiving device, the access device needs to map or convert the session information of the service. For related specific descriptions of the session information of the service, refer to the foregoing brief introduction part. Details are not described herein again.

S 1004. The packet receiving device determines the quality of service of the service based on the session information of the service and the packet type of the first packet.

In a possible implementation, as described above, the first packet may further include a first detection identifier. Correspondingly, the determining, by the packet receiving device, the quality of service of the service based on the session information of the service and the packet type of the first packet includes: determining, by the packet receiving device based on the packet type of the first packet, that the first packet is a detection packet; determining, by the packet receiving device, a context of the first packet based on the first detection identifier, where the context of the first packet includes an expected receiving periodicity; and determining, by the packet receiving device, the quality of service of the service based on the session information of the service, the expected receiving periodicity, and arrival information of the first packet.

In another possible implementation, the determining, by the packet receiving device, the quality of service of the service based on the session information of the service and the packet type of the first packet includes: determining, by the packet receiving device based on the packet type of the first packet, that the first packet is a detection packet; determining, by the packet receiving device, a context of the service based on the session information of the service, where the context of the service includes an expected receiving periodicity; and determining, by the packet receiving device, the quality of service of the service based on the session information of the service, the expected receiving periodicity, and arrival information of the first packet.

In still another possible implementation, as described above, the first packet further includes a sending periodicity; and the determining, by the packet receiving device, the quality of service of the service based on the session information of the service and the packet type of the first packet includes: determining, by the packet receiving device based on the packet type of the first packet, that the first packet is a detection packet; and determining, by the packet receiving device, the quality of service of the service based on the session information of the service, the sending periodicity, and arrival information of the first packet.

In other words, in this embodiment of this application, the packet receiving device may locate a specific service flow based on the session information of the service. For example, the UPF network element may locate a QoS flow based on a QFI and a TEID at the GTP-U layer. The packet receiving device may learn, based on the packet type of the first packet, that the first packet is the detection packet. For example, the terminal may learn, based on PT=1 at the SDAP layer in FIG. 11(a), that the first packet is a detection packet. Alternatively, the terminal may learn, based on type=monitoring at the TFCP layer in FIG. 11(b), that the first packet is a detection packet. Alternatively, the terminal may learn, based on the TFCP ID at the TFCP layer in FIG. 11(b) and the context information corresponding to the TFCP ID, that the first packet is a detection packet. Alternatively, the UPF network element may learn, based on PT=2 at the GTP-U layer in FIG. 11(c), that the first packet is a detection packet. Alternatively, the terminal may learn, based on type=monitoring at the TFCP layer in FIG. 11(d), that the first packet is a detection packet. Alternatively, the terminal may learn, based on a TFCP ID at the TFCP layer in FIG. 11(d) and context information corresponding to the TFCP ID, that the first packet is a detection packet.

After the packet receiving device locates a specific service flow and learns that the first packet is a detection packet, the packet receiving device may further determine the quality of service of the service based on the obtained expected receiving periodicity or the sending periodicity and the arrival information of the first packet. According to to the session information of the service, an end-to-end packet transmission delay of the located service flow is, for example, required to be 6 ms, and an expected receiving rule is that one detection packet is received every 2 ms. In this case, if the arrival information of the first packet indicates that no first packet is received in three consecutive periodicities, the packet receiving device may consider that a link is faulty. In other words, an arrival interval of the first packet does not meet a quality of service requirement of the service. Alternatively, for example, according to the session information of the service, an end-to-end packet transmission delay of the located service flow is required to be 6 ms, and the sending periodicity for sending one detection packet is 2 ms. Because the sending periodicity is equal to a receiving periodicity, it means that the packet receiving device receives one detection packet every 2 ms. In this case, if the arrival information of the first packet indicates that no first packet is received in three consecutive periodicities, the packet receiving device may consider that a link is faulty. In other words, an arrival interval of the first packet does not meet a quality of service requirement of the service.

In the prior art, the quality of service of the service can be detected only through an ACK delay mechanism. However, according to the method for detecting quality of service of a service provided in this embodiment of this application, the quality of service of the service can be detected in real time. For analysis of a related technical effect, refer to the descriptions of the system for detecting quality of service of a service. Details are not described herein again.

Actions of the packet sending device or the packet receiving device in steps S1001 to S1004 may be performed by the processor 901 in the communications device 900 shown in FIG. 9 by invoking the application program code stored in the memory 903. This is not limited in this embodiment of this application.

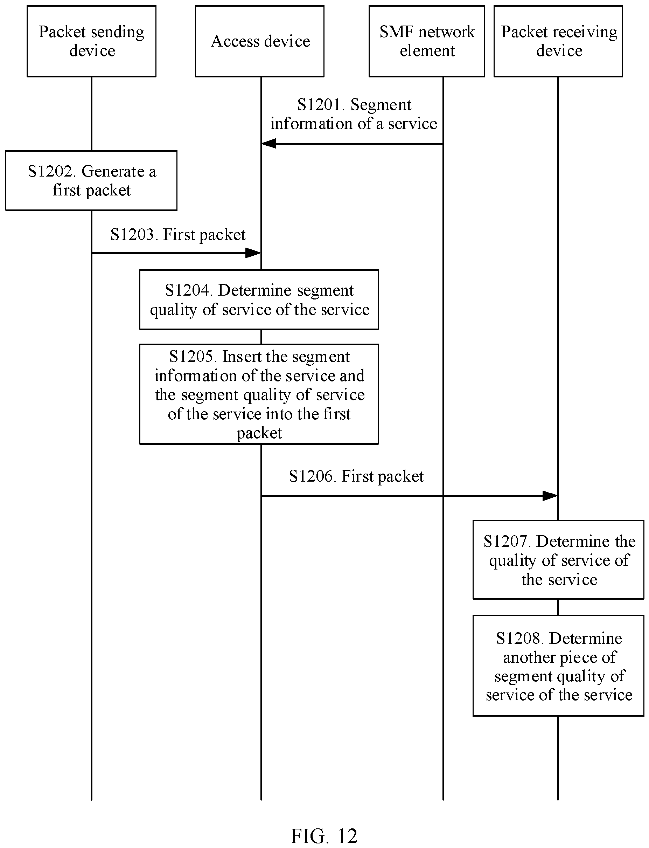

Optionally, for example, the system 50 for detecting quality of service of a service shown in FIG. 5 is applied to the 5G network shown in FIG. 6. FIG. 12 shows another method for detecting quality of service of a service which is however not part of the invention. The method for detecting quality of service of a service is applicable to a scenario in which an access device processes a detection packet, and includes the following steps.

S1201. An SMF network element sends segment information of a service to the access device, and the access device receives the segment information of the service from the SMF network element.

A segment in this embodiment of this application may include a first segment and/or a second segment.

The first segment refers to a path between the access device and a UPF network element, and corresponds to first segment information of the service. The first segment information of the service may include, for example, a first segment identifier. Alternatively, the first segment information of the service may include, for example, an address of the UPF network element, an address of the access device, and a packet transmission direction. Alternatively, the first segment information of the service includes an address of the access device, and the like. This is not specifically limited in this embodiment of this application.

The second segment refers to a path between the access device and a terminal, and corresponds to second segment information of the service. The second segment information of the service may include, for example, a second segment identifier. Alternatively, the second segment information of the service may include, for example, an address of the terminal, the address of the access device, and the packet transmission direction. Alternatively, the second segment information of the service includes the address of the access device, and the like. This is not specifically limited in this embodiment of this application.

It should be noted that in this embodiment of this application, there is no necessary execution sequence between step S1201 and the following steps S1202 to S1204. Step S1201 may be performed before or after one or more steps in step S1202 to S1204; or step S1201 and one or more steps in step S1202 to step S1204 may be simultaneously performed. This is not specifically limited in this embodiment of this application.

S1202. Similar to step S1001, and an only difference between S1202 and step S1001 lies in the following: First, because this embodiment of this application is applicable to the scenario in which the access device processes a detection packet, in this embodiment of this application, if the 3GPP network protocol stack shown in FIG. 2 is used for a first packet, the access device perceives an LQAP. Second, because this embodiment of this application is applicable to the scenario in which the access device processes a detection packet, in this embodiment of this application, the 3GPP network protocol stack shown in FIG. 3 rather than the 3GPP network protocol stack shown in FIG. 4 is used for the first packet. The 3GPP network protocol stack shown in FIG. 3 is the same as the 3GPP network protocol stack shown in FIG. 4 on both a terminal side and a UPF network element side. Therefore, if the first packet is encapsulated by using the 3GPP network protocol stack shown in FIG. 3, for related descriptions, refer to the description in step S1001 of encapsulating the first packet by using the 3GPP network protocol stack shown in FIG. 4. Details are not described herein again. In addition, for other related descriptions, refer to step S1001. Details are not described herein again.

S1203. A packet sending device sends the first packet to the access device, and the access device receives the first packet from the packet sending device.

S1204. The access device determines segment quality of service of the service.

Case 1: When the packet sending device is a terminal, and a packet receiving device is a UPF network element:
The determining, by the access device, segment quality of service of the service may specifically include: determining, by the access device, second segment quality of service of the service based on session information of the service and a packet type of the first packet, where the second segment quality of service of the service includes corresponding quality of service of the service transmitted on the path between the access device and the terminal.

For a specific implementation in which the access device determines the second segment quality of service of the service based on the session information of the service and the packet type of the first packet, refer to step S1004. An only difference from step S1004 lies in that an expected receiving periodicity or a sending periodicity used by the access device to determine the second segment quality of service of the service have a different value from an expected receiving periodicity or a sending periodicity used by the UPF network element to determine the quality of service of the service in step S1004. For related descriptions, refer to step S1004, and details are not described herein again.

Case 2: When the packet sending device is a UPF network element, and the packet receiving device is the terminal:
The determining, by the access device, segment quality of service of the service may specifically include: determining, by the access device, first segment quality of service of the service based on session information of the service and a packet type of the first packet, where the first segment quality of service of the service includes corresponding quality of service of the service transmitted on the path between the access device and the UPF network element.

For a specific implementation in which the access device determines the first segment quality of service of the service based on the session information of the service and the packet type of the first packet, refer to step S1004. An only difference from step S1004 lies in that an expected receiving periodicity or a sending periodicity used by the access device to determine the first segment quality of service of the service have a different value from an expected receiving periodicity or a sending periodicity used by the terminal to determine the quality of service of the service in step S1004. For related descriptions, refer to step S1004, and details are not described herein again.

S1205. The access device inserts the segment information of the service and the segment quality of service of the service into the first packet.

Case 1: When the packet sending device is a terminal, and the packet receiving device is a UPF network element:
The inserting, by the access device, the segment information of the service and the segment quality of service of the service into the first packet may specifically include: inserting, by the access device, the second segment information of the service and the second segment quality of service of the service into the first packet. For related descriptions of the second segment information of the service, refer to step S1201. For related descriptions of the second segment quality of service of the service, refer to step S1204. Details are not described herein again.

Case 2: When the packet sending device is a UPF network element, and the packet receiving device is a terminal:
The inserting, by the access device, the segment information of the service and the segment quality of service of the service into the first packet may specifically include: inserting, by the access device, the first segment information of the service and the first segment quality of service of the service into the first packet. For related descriptions of the first segment information of the service, refer to step S1201. For related descriptions of the first segment quality of service of the service, refer to step S1204. Details are not described herein again.

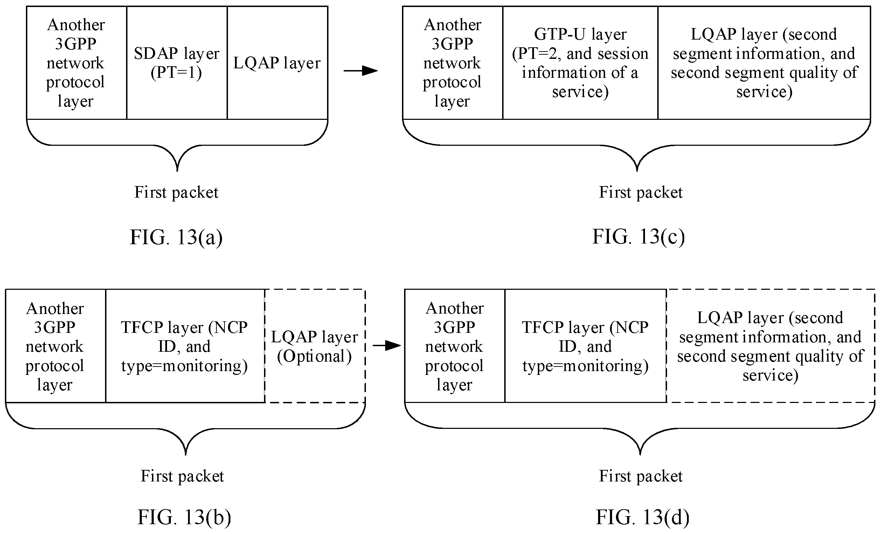

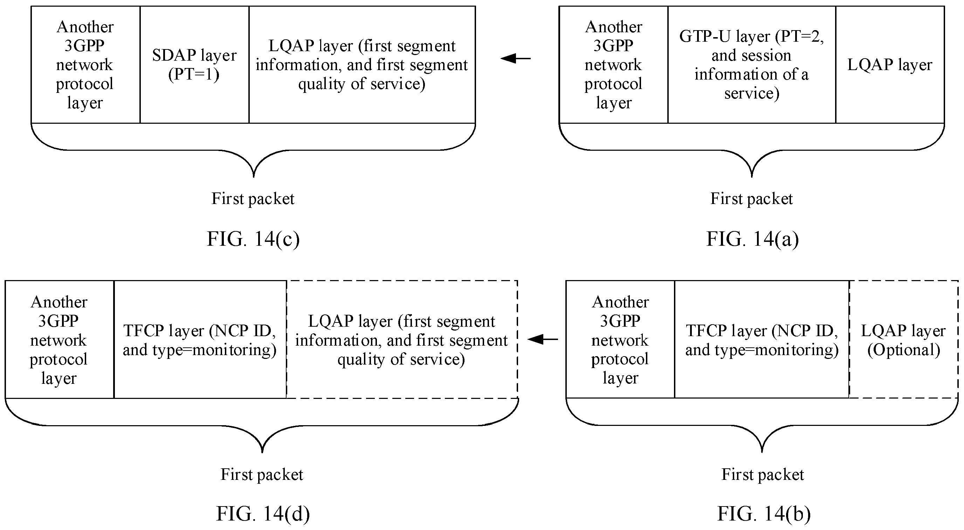

S1206. Similar to step S1003, and an only difference from step S1003 lies in the following: First, because this embodiment of this application is applicable to the scenario in which the access device processes a detection packet, in this embodiment of this application, if the 3GPP network protocol stack shown in FIG. 2 is used for the first packet, the access device perceives the LQAP. Second, because this embodiment of this application is applicable to the scenario in which the access device processes a detection packet, in this embodiment of this application, the 3GPP network protocol stack shown in FIG. 3 rather than the 3GPP network protocol stack shown in FIG. 4 is used for the first packet. The 3GPP network protocol stack shown in FIG. 3 on both the terminal side and the UPF network element side is the same. Therefore, if the first packet is encapsulated by using the 3GPP network protocol stack shown in FIG. 3, for related descriptions, refer to the description in step S1001 of encapsulating the first packet by using the 3GPP network protocol stack shown in FIG. 4. Details are not described herein again. Third, because in this embodiment of this application, the segment information of the service and the segment quality of service of the service are inserted, a format of the first packet is different from that in FIG. 11. For example, when the packet sending device is a terminal, and the packet receiving device is a UPF network element, the format of the first packet transmitted between the access device and the terminal may be shown in FIG. 13(a), and the format of the first packet transmitted between the access device and the UPF network element may be shown in FIG. 13(c). Alternatively, the format of the first packet transmitted between the access device and the terminal may be shown in FIG. 13(b), and the format of the first packet transmitted between the access device and the UPF network element may be shown in FIG. 13(d). FIG. 13(a) is the same as FIG. 11(a); and FIG. 13(b) is the same as in FIG. 11(b). Compared with the format shown in FIG. 11(c), the format shown in FIG. 13(c) additionally includes the second segment information of the service and the second segment quality of service of the service to an LQAP layer. Compared with the format shown in FIG. 11(d), the format shown in FIG. 13(d) additionally includes the second segment information of the service and the second segment quality of service of the service to the LQAP layer. Certainly, if FIG. 13(d) does not include the LQAP layer, the second segment information of the service and the second segment quality of service of the service may alternatively be inserted into a TFCP layer. This is not specifically limited in this embodiment of this application. Alternatively, for example, when the packet sending device is a UPF network element and the packet receiving device is a terminal, the format of the first packet transmitted between the access device and the UPF network element may be shown in FIG. 14(a), and the format of the first packet transmitted between the access device and the terminal may be shown in FIG. 14(c). Alternatively, the format of the first packet transmitted between the access device and the UPF network element may be shown in FIG. 14(b), and the format of the first packet transmitted between the access device and the terminal may be shown in FIG. 14(d). FIG. 14(a) is the same as FIG. 11(c); and FIG. 14(b) is the same as FIG. 11(d). Compared with the format shown in FIG. 11(a), the format shown in FIG. 14(c) additionally includes the first segment information of the service and the first segment quality of service of the service to an LQAP layer. Compared with the format shown in FIG. 11(b), the format shown in FIG. 14(d) additionally includes the first segment information of the service and the first segment quality of service of the service to the LQAP layer. Certainly, if FIG. 14(d) does not include the LQAP layer, the first segment information of the service and the first segment quality of service of the service may alternatively be inserted into a TFCP layer. This is not specifically limited in this embodiment of this application.

S1207. Same as step S1004. For related descriptions, refer to the embodiment shown in FIG. 10. Details are not described herein again.

S1208. The packet receiving device determines another piece of segment quality of service of the service based on the quality of service of the service, the inserted segment information, and the segment quality of service of the service.

Case 1: When the packet sending device is a terminal, and the packet receiving device is a UPF network element:
The determining, by the packet receiving device, another piece of segment quality of service of the service based on the quality of service of the service, the inserted segment information, and the segment quality of service of the service may specifically include: determining, by the packet receiving device, the first segment quality of service of the service based on the quality of service of the service, the inserted second segment information, and the second segment quality of service of the service.

For example, the quality of service is represented by a delay. Assuming that a delay between the terminal and the UPF network element is 5 ms, and a delay between the terminal and the access device is 3 ms, it may be determined that a delay between the access device and the UPF network element is 2 ms.

Case 2: When the packet sending device is a UPF network element, and the packet receiving device is a terminal:
The determining, by the packet receiving device, another piece of segment quality of service of the service based on the quality of service of the service, the inserted segment information, and the segment quality of service of the service may specifically include: determining, by the packet receiving device, the second segment quality of service of the service based on the quality of service of the service, the inserted first segment information, and the first segment quality of service of the service.

For example, the quality of service is represented by a delay. Assuming that a delay between the terminal and the UPF network element is 5 ms, and a delay between the UPF network element and the access device is 3 ms, it may be determined that a delay between the access device and the terminal is 2 ms.

Optionally, in this embodiment of this application, in another possible implementation, if clocks of the packet sending device, the access device, and the packet receiving device are synchronized with each other, the packet receiving device may not obtain the expected receiving periodicity, but the packet sending device may insert a timestamp 1 of generating the first packet into the first packet when generating the first packet. After receiving the first packet, the access device inserts the foregoing segment information and the segment quality of service, and further needs to insert a timestamp 2 of sending the first packet to the packet receiving device. The packet receiving device may calculate a transmission delay based on a moment at which the packet receiving device receives the first packet and at least one of the timestamp 1 or the timestamp 2. This is not specifically limited in this embodiment of this application. For example, the timestamp 2 - the timestamp 1 = a transmission delay between the packet sending device and the access device. The moment at which the packet receiving device receives the first packet - the timestamp 1 = a transmission delay between the packet sending device and the packet receiving device. The moment at which the packet receiving device receives the first packet - the timestamp 2 = a transmission delay between the access device and the packet receiving device.

In the prior art, the quality of service of the service can be detected only through an ACK delay mechanism. However, according to the method for detecting quality of service of a service provided in this embodiment of this application, the quality of service of the service and the segment quality of service of the service can be detected in real time. For analysis of a related technical effect, refer to the descriptions of the system for detecting quality of service of a service. Details are not described herein again.

Actions of the packet sending device or the packet receiving device in steps S1201 to S1208 may be performed by the processor 901 in the communications device 900 shown in FIG. 9 by invoking the application program code stored in the memory 903. This is not limited in this embodiment of this application.

Optionally, both the method for detecting quality of service of a service shown in FIG. 10 and the method for detecting quality of service of a service FIG. 12 are described by using an example in which one monitoring link is established for one service flow. Certainly, a plurality of monitoring links may be established for one service flow. For example, the system 50 for detecting quality of service of a service shown in FIG. 5 is applied to the 5G network shown in FIG. 6. As shown in FIG. 15, three monitoring links may be established for one service flow, including a monitoring link 1 between the terminal and the UPF network element, a monitoring link 2 between the terminal and the access device, and a monitoring link 3 between the access device and the UPF network element. The monitoring link 1 corresponds to the first detection identifier in the foregoing brief introduction part. The monitoring link 2 corresponds to the second detection identifier in the foregoing brief introduction part. The monitoring link 3 corresponds to the third detection identifier in the foregoing brief introduction part. In this scenario:

Case 1: If the terminal is used as the packet receiving device, when the UPF network element is used as the packet sending device, the terminal may determine quality of service, of the service, corresponding to the monitoring link 1; or when the access device is used as the packet sending device, the terminal may determine the second segment quality of service, of the service, corresponding to the monitoring link 2. For a method for detecting the quality of service, of the service, corresponding to the monitoring link 1 and a method for detecting the second segment quality of service, of the service, corresponding to the monitoring link 2, refer to the embodiment shown in FIG. 10. An only difference from the embodiment shown in FIG. 10 lies in the following: In this embodiment of this application, when the quality of service, of the service, corresponding to the monitoring link 1 is detected, the first packet needs to carry the first detection identifier. When the second segment quality of service, of the service, corresponding to the monitoring link 2 is detected, step S1001 and step S1002 are not required. The access device is used as the packet sending device, and steps S1003 and S1004 are performed. In addition, to be distinguished from the first packet transmitted on the monitoring link 1, a detection packet transmitted on the monitoring link 2 may be denoted as a second packet, and the second packet includes the second detection identifier, the session information of the service, and a packet type of the second packet, where the packet type of the second packet is the same as the packet type of the first packet.

Optionally, in this embodiment of this application, after determining the quality of service, of the service, corresponding to the monitoring link 1 and the second segment quality of service, of the service, corresponding to the monitoring link 2, the terminal may determine, based on the quality of service, of the service, corresponding to the monitoring link 1 and the second segment quality of service, of the service, corresponding to the monitoring link 2, the first segment quality of service, of the service, corresponding to the monitoring link 3. For example, assuming that a delay between the terminal and the UPF network element is 5 ms, and a delay between the terminal and the access device is 3 ms, it may be determined that a delay between the access device and the UPF network element is 2 ms.

Case 2: If the UPF network element is used as the packet receiving device, when the terminal is used as the packet sending device, the UPF network element may determine quality of service, of the service, corresponding to the monitoring link 1; or when the access device is used as the packet sending device, the UPF network element may determine the first segment quality of service, of the service, corresponding to the monitoring link 3. For a method for detecting the quality of service, of the service, corresponding to the monitoring link 1 and a method for detecting the first segment quality of service, of the service, corresponding to the monitoring link 3, refer to the embodiment shown in FIG. 10. An only difference from the embodiment shown in FIG. 10 lies in the following: In this embodiment of this application, when the quality of service, of the service, corresponding to the monitoring link 1 is detected, the first packet needs to carry the first detection identifier. When the first segment quality of service, of the service, corresponding to the monitoring link 3 is detected, step S1001 and step S1002 are not required. The access device is used as the packet sending device, and steps S1003 and S1004 are performed. In addition, to be distinguished from the first packet transmitted on the monitoring link 1, a detection packet transmitted on the monitoring link 3 may be denoted as a second packet, and the second packet includes the third detection identifier, the session information of the service, and a packet type of the second packet, where the packet type of the second packet is the same as the packet type of the first packet.

In this embodiment of this application, after determining the quality of service, of the service, corresponding to the monitoring link 1 and the first segment quality of service, of the service, corresponding to the monitoring link 3, the terminal may determine, based on the quality of service, of the service, corresponding to the monitoring link 1 and the first segment quality of service, of the service, corresponding to the monitoring link 3, the second segment quality of service, of the service, corresponding to the monitoring link 2. For example, assuming that a delay between the terminal and the UPF network element is 5 ms, and a delay between the UPF network element and the access device is 3 ms, it may be determined that a delay between the access device and the terminal is 2 ms.

Case 3: If the access device is used as the packet receiving device, when the terminal is used as the packet sending device, the access device may determine the second segment quality of service, of the service, corresponding to the monitoring link 2; or when the UPF network element is used as the packet sending device, the terminal may determine the first segment quality of service, of the service, corresponding to the monitoring link 3. For a method for detecting the second segment quality of service, of the service, corresponding to the monitoring link 2 and a method for detecting the first segment quality of service, of the service, corresponding to the monitoring link 3, refer to the embodiment shown in FIG. 10. An only difference from the embodiment shown in FIG. 10 lies in the following: In this embodiment of this application, when the second segment quality of service, of the service, corresponding to the monitoring link 2 is detected, step S1001 and step S1002 are not required. The terminal is used as the packet sending device, and steps S1003 and S1004 are performed. When the first segment quality of service, of the service, corresponding to the monitoring link 3 is detected, step S1001 and step S1002 are not required. The UPF network element is used as the packet sending device, and steps S1003 and S1004 are performed. In addition, to be distinguished from the first packet transmitted on the monitoring link 2, a detection packet transmitted on the monitoring link 3 may be denoted as a second packet, and the second packet includes the third detection identifier, the session information of the service, and a packet type of the second packet, where the packet type of the second packet is the same as the packet type of the first packet.

In this embodiment of this application, after determining the second segment quality of service, of the service, corresponding to the monitoring link 2 and the first segment quality of service, of the service, corresponding to the monitoring link 3, the terminal may determine, based on the second segment quality of service, of the service, corresponding to the monitoring link 2 and the first segment quality of service, of the service, corresponding to the monitoring link 3, the quality of service, of the service, corresponding to the monitoring link 1. For example, assuming that a delay between the terminal and the access device is 3 ms, and a delay between the access device and the UPF network element is 2 ms, it may be determined that a delay between the terminal and the UPF network element is 5 ms.

In the prior art, the quality of service of the service can be detected only through the ACK delay mechanism. However, according to the method for detecting quality of service of a service provided in this embodiment of this application, the quality of service of the service or the segment quality of service of the service can be detected in real time. For analysis of a related technical effect, refer to the descriptions of the system for detecting quality of service of a service. Details are not described herein again.

Optionally, assuming that the system 50 for detecting quality of service of a service shown in FIG. 5 is applied to the 4G network shown in FIG. 7 or the 4.5G network shown in FIG. 8, a corresponding method for detecting quality of service of a service is similar to the method for detecting quality of service of a service shown in FIG. 10, the method for detecting quality of service of a service shown in FIG. 12, or the method for detecting quality of service of a service shown in FIG. 15. Only corresponding network elements, corresponding network protocol stacks, and the like need to be correspondingly replaced. For details, refer to the embodiment shown in FIG. 10, the embodiment shown in FIG. 12, or the embodiment shown in FIG. 15. Details are not described herein again.

Optionally, in the embodiments of this application, quality of service of a service or segment quality of service of the service may be detected in a loopback detection manner. For example, the system 160 for detecting quality of service of a service shown in FIG. 16 is applied to the 5G network shown in FIG. 6, and a packet transceiver device is a terminal and a loopback device is a UPF network element; or a packet transceiver device is a UPF network element and a loopback device is a terminal. FIG. 17 shows another method for detecting quality of service of a service according to an embodiment of this application. The method includes the following steps.

S1701. The packet transceiver device generates a first packet, where the first packet includes first session information of a service, a packet type of the first packet, and a loopback indication.

For related descriptions of the first session information of the service in step S1701 and related descriptions of second session information of the service in following step S 1704 in this embodiment of this application, refer to the embodiment shown in FIG. 16. Details are not described herein again.

In addition, for related descriptions of the packet type of the first packet, refer to the embodiment shown in FIG. 5. Details are not described herein again.

Optionally, in this embodiment of this application, the first session information of the service and the packet type of the first packet may be encapsulated by using a network protocol stack. For related descriptions, refer to the descriptions, in the embodiment shown in FIG. 10, of encapsulating the session information of the service and the packet type of the first packet by using the network protocol stack. Details are not described herein again. In addition, when a format of the first packet is as shown in FIG. 2, the loopback indication in this embodiment of this application is generally at an LQAP layer. Alternatively, when a format of the first packet is as shown in FIG. 3 or FIG. 4, when the LQAP layer is not integrated into a TFCP layer, the loopback indication is generally at the LQAP layer; or when the LQAP layer is integrated into a TFCP layer, the loopback indication may be at the TFCP layer. This is not specifically limited in this embodiment of this application.

Optionally, the loopback indication in this embodiment of this application may be an explicit indication. In other words, it may be directly determined, based on the loopback indication field, that current detection is loopback detection. Certainly, the loopback indication may alternatively be an implicit indication. In other words, it may be determined, by associating the loopback indication field with other information, that current detection is loopback detection. For example, a context of the first packet may be found based on an LQAP ID or a TFCP ID, and context information of the first packet indicates that the current detection is the loopback detection. This is not specifically limited in this embodiment of this application.

Optionally, in this embodiment of this application, the first packet may further include a first detection identifier, and the first detection identifier is used to indicate to detect quality of service of the service. This is not specifically limited in this embodiment of this application.

In the invention, the first packet further includes a timestamp t1. The timestamp t1 is a moment at which the packet transceiver device sends the first packet to the loopback device, or a moment at which the packet transceiver device generates the first packet. This is not specifically limited in this application.

S1702. The packet transceiver device sends the first packet to an access device, and the access device receives the first packet from the packet transceiver device.

S1703. The access device sends the first packet to the loopback device, and the loopback device receives the first packet from the access device.

Optionally, in this embodiment of this application, whether a device is the packet transceiver device or the loopback device may be determined based on the context of the first packet stored in the device. For example, if the context of the first packet stored in a device indicates that the device is the packet transceiver device, the device is the packet transceiver device. Alternatively, if the context of the first packet stored in a device indicates that the device is the loopback device, the device is the loopback device. This is not specifically limited in this embodiment of this application.

It should be noted that, in this embodiment of this application, packets transmitted over a loopback path in a same direction are considered as a same detection packet. In other words, a packet transmitted from the packet transceiver device to the loopback device is different from a packet transmitted from the loopback device to the packet transceiver device. Two packets transmitted on a same loopback path in different directions include a same detection identifier. A general description is provided herein, and details are not described below again.

For descriptions of re-encapsulating the first session information of the service and the packet type of the first packet after the access device decapsulates the first packet, and related descriptions of mapping the first session information of the service by the access device, refer to the embodiment shown in FIG. 10. Details are not described herein again.

S1704. The loopback device generates a second packet based on the first packet, where the second packet includes second session information of the service, a packet type of the second packet, and the loopback indication, and the packet type of the second packet is the same as the packet type of the first packet.

The loopback indication in step S 1704 is the same as the loopback indication in step S1701. For related descriptions, refer to step S1701. Details are not described herein again.

For example, in this embodiment of this application, when the packet transceiver device is the terminal, and the loopback device is the UPF network element, the first session information included in the first packet received by the loopback device may be, for example, a QFI and a TEID 1, and the second session information included in the second packet generated by the loopback device may be, for example, the QFI and a TEID 2. Alternatively, when the packet transceiver device is the UPF network element, and the loopback device is the terminal, the first session information included in the first packet received by the loopback device may be, for example, a QFI and a first radio bearer identifier, and the second session information included in the second packet generated by the loopback device may be, for example, the QFI and a second radio bearer identifier.

Optionally, in this embodiment of this application, the loopback device may further insert an arrival moment t2 of the first packet and a sending moment t3 of the second packet into the first packet. This is not specifically limited in this embodiment of this application.

Optionally, in this embodiment of this application, the second session information of the service and the packet type of the second packet may be encapsulated by using the network protocol stack. For related descriptions, refer to the descriptions, in the embodiment shown in FIG. 10, of encapsulating the session information of the service and the packet type of the first packet by using the network protocol stack. Details are not described herein again. In addition, when a format of the second packet is as shown in FIG. 2, the loopback indication in this embodiment of this application is generally at the LQAP layer. Alternatively, when a format of the second packet is as shown in FIG. 3 or FIG. 4, when the LQAP is not integrated into the TFCP layer, the loopback indication is generally at the LQAP layer; or when the LQAP is integrated into the TFCP layer, the loopback indication may be at the TFCP layer. This is not specifically limited in this embodiment of this application.

S1705. The loopback device sends the second packet to the access device, and the access device receives the second packet from the loopback device.

S1706. The access device sends the second packet to the packet transceiver device, and the packet transceiver device receives the second packet from the access device.

For descriptions of re-encapsulating the second session information of the service and the packet type of the second packet after the access device decapsulates the second packet, and related descriptions of mapping the second session information of the service by the access device, refer to the embodiment shown in FIG. 10. Details are not described herein again.

S1707. The packet transceiver device determines the quality of service of the service based on the second session information of the service, the packet type of the second packet, and the loopback indication.

In this embodiment of this application, the packet transceiver device may locate a specific service flow based on the second session information of the service, and may learn, based on the packet type of the second packet, that the second packet is a detection packet. For related descriptions, refer to step S1004. Details are not described herein again. In addition, in this embodiment of this application, the packet transceiver device may further learn, based on the loopback indication, that a type of the current detection is the loopback detection.

Optionally, in this embodiment of this application, if the first packet includes the first detection identifier, the second packet may also include the first detection identifier. This is not specifically limited in this embodiment of this application.

Optionally, in this embodiment of this application, if the first packet includes the timestamp t1, the second packet may also include the timestamp t1. This is not specifically limited in this embodiment of this application.

Optionally, in this embodiment of this application, a loopback delay may be used to feed back or represent the quality of service of the service. Assuming that a moment at which the packet transceiver device receives the second packet is t4, in this embodiment of this application, the loopback delay may be determined in the following two manners:
Manner A: Loopback delay = t4 - t1; or
Manner B: Loopback delay = t4 - t1 - (t3 - t2)

A processing time of the loopback device is not considered in manner A, but is considered in manner B. A general description is provided herein, and details are not described below again.

Optionally, in this embodiment of this application, the first packet and the second packet may further include a loopback path length, and the loopback path length is used to locate a fault. In other words, the loopback detection provided in this embodiment of this application may be further used to locate a fault. For example, if the packet transceiver device does not receive, after sending the first packet to the loopback device, the second packet sent by the loopback device, the packet transceiver device may determine that a fault exists on a path between the loopback device and the packet transceiver device, and further determines that the quality of service of the service or segment quality of service of the service is relatively poor. This is not specifically limited in this embodiment of this application.

In the prior art, the quality of service of the service can be detected only through an ACK delay mechanism. However, according to the method for detecting quality of service of a service provided in this embodiment of this application, the quality of service of the service can be detected in real time. For analysis of a related technical effect, refer to the descriptions of the system for detecting quality of service of a service. Details are not described herein again.

Actions of the loopback device in steps S1701 to S1707 may be performed by the processor 901 in the communications device 900 shown in FIG. 9 by invoking the application program code stored in the memory 903. This is not limited in this embodiment of this application.

Optionally, the embodiment shown in FIG. 17 is described by using an example in which the system 160 for detecting quality of service of a service shown in FIG. 16 is applied to the 5G network shown in FIG. 6, and the packet transceiver device is the terminal, and the loopback device is the UPF network element; or the packet transceiver device is the UPF network element and the loopback device is the terminal. Certainly, the method for detecting quality of service of a service provided in this embodiment of this application may alternatively be described by using an example in which the system 160 for detecting quality of service of a service shown in FIG. 16 is applied to the 5G network shown in FIG. 6, and the packet transceiver device is the UPF network element and the loopback device is the access device; or the packet transceiver device is the access device and the loopback device is the UPF network element. In this case, first segment quality of service, of the service, corresponding to the monitoring link 3 in FIG. 15 is detected. Alternatively, the method for detecting quality of service of a service provided in this embodiment of this application may be described by using an example in which the system 160 for detecting quality of service of a service shown in FIG. 16 is applied to the 5G network shown in FIG. 6, and the packet transceiver device is the terminal and the loopback device is the access device; or the packet transceiver device is the access device and the loopback device is the terminal. In this case, second segment quality of service, of the service, corresponding to the monitoring link 2 in FIG. 15 is detected. For related descriptions, refer to the embodiment shown in FIG. 17. Details are not described herein again.

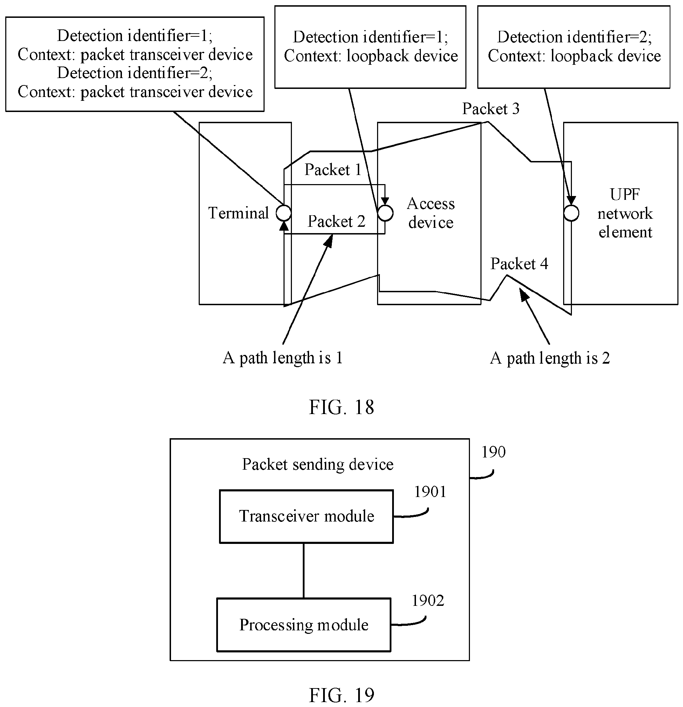

For example, FIG. 18 is a schematic diagram of loopback detection according to this embodiment of this application. The terminal initiates the loopback detection, and a detection identifier is 1. Because the access device includes a context of a packet 1 corresponding to the detection identifier, it may be determined, based on the context of the packet 1, that the access device is the loopback device. Then the access device may loop back a packet 2 corresponding to the packet 1 to the terminal. After receiving the packet 2, the terminal may continue to initiate the loopback detection, and a detection identifier of a detection packet is 2. Because the access device does not include a context of a packet 3 corresponding to the detection identifier, the access device considers the detection packet as a common service packet, and transmits the detection packet to the UPF network element. The UPF network element includes the context of the packet 3 corresponding to the detection identifier, and therefore the UPF network element may determine, based on the context of the packet 3, that the UPF network element is the loopback device, and then loop back a packet 4 corresponding to the packet 3 to the terminal. Because the terminal learns segment loopback delays and an end-to-end delay, if a segment of the path is faulty, a fault can be detected through the loopback detection.

Optionally, assuming that the system 16 for detecting quality of service of a service shown in FIG. 16 is applied to the 4G network shown in FIG. 7 or the 4.5G network shown in FIG. 8, a corresponding method for detecting quality of service of a service is similar to the method for detecting quality of service of a service shown in FIG. 17. Only corresponding network elements, corresponding network protocol stacks, and the like need to be correspondingly replaced. For details, refer to the embodiment shown in FIG. 17. Details are not described herein again.

In conclusion, an embodiment of this application discloses a method for detecting quality of service of a service, where the method includes: generating, by a packet sending device, a first packet, where the first packet includes session information of a service and a packet type of the first packet; and sending, by the packet sending device, the first packet to a packet receiving device, where the first packet is used to detect at least one of quality of service of the service or segment quality of service of the service.

In an implementation, the generating, by a packet sending device, a first packet includes: obtaining, by the packet sending device, the session information of the service and the packet type of the first packet; and encapsulating, by the packet sending device, the session information of the service and the packet type of the first packet by using a first network protocol stack, to obtain the first packet.

In an implementation, the packet sending device includes a terminal, and the packet receiving device includes an access device or a network device; or the packet sending device includes an access device, and the packet receiving device includes a terminal; and the session information of the service is encapsulated by using at least one of a service data adaptation protocol SDAP or a packet data convergence protocol PDCP in the first network protocol stack, and the packet type of the first packet is encapsulated by using the SDAP or the PDCP in the first network protocol stack.

In an implementation, the packet sending device includes a terminal, and the packet receiving device includes an access device or a network device; or the packet sending device includes an access device, and the packet receiving device includes a terminal; and the session information of the service is encapsulated by using at least one of an SDAP or a PDCP in the first network protocol stack, and the packet type of the first packet is encapsulated by using a traffic flow control protocol TFCP in the first network protocol stack; or the session information of the service and the packet type of the first packet are encapsulated by using a TFCP in the first network protocol stack.

In an implementation, the packet sending device includes an access device, and the packet receiving device includes a network device; or the packet sending device includes a network device, and the packet receiving device includes a terminal or an access device; and the session information of the service and the packet type of the first packet are encapsulated by using a GTP-U in the first network protocol stack.

In an implementation, the packet sending device includes an access device, and the packet receiving device includes a network device; or the packet sending device includes a network device, and the packet receiving device includes a terminal or an access device; and the session information of the service is encapsulated by using a GTP-U in the first network protocol stack, and the packet type of the first packet is encapsulated by using a TFCP in the first network protocol stack; or the session information of the service and the packet type of the first packet are encapsulated by using a TFCP in the first network protocol stack.

In the foregoing method for detecting quality of service of a service, for example, for the operations of the packet sending device, refer to the operations of the packet sending device in FIG. 10 or FIG. 12 and the foregoing related written descriptions. Details are not described herein again.

In addition, an embodiment of this application further discloses a method for detecting quality of service of a service, where the method includes: receiving, by a packet receiving device, a first packet from a packet sending device, where the first packet includes session information of a service and a packet type of the first packet; and determining, by the packet receiving device, at least one of quality of service of the service or segment quality of service of the service based on the session information of the service and the packet type of the first packet.

In an implementation, the packet receiving device includes a terminal, and the packet sending device includes a network device; and the first packet further includes first segment information of the service and first segment quality of service of the service, where the first segment quality of service of the service includes corresponding quality of service of the service transmitted on a path between an access device and the network device. Correspondingly, the determining, by the packet receiving device, at least one of quality of service of the service or segment quality of service of the service based on the session information of the service and the packet type of the first packet includes: determining, by the packet receiving device, the quality of service of the service based on the session information of the service and the packet type of the first packet; and determining, by the packet receiving device, second segment quality of service of the service based on the first segment information of the service, the first segment quality of service of the service, and the quality of service of the service, where the second segment quality of service of the service includes corresponding quality of service of the service transmitted on a path between the access device and the terminal.

In another implementation, the packet receiving device includes a network device, and the packet sending device includes a terminal; and the first packet further includes second segment information of the service and second segment quality of service of the service, where the second segment quality of service of the service includes corresponding quality of service of the service transmitted on a path between an access device and the terminal. Correspondingly, the determining, by the packet receiving device, at least one of quality of service of the service or segment quality of service of the service based on the session information of the service and the packet type of the first packet includes: determining, by the packet receiving device, the quality of service of the service based on the session information of the service and the packet type of the first packet; and determining, by the packet receiving device, first segment quality of service of the service based on the second segment information of the service, the second segment quality of service of the service, and the quality of service of the service, where the first segment quality of service of the service includes corresponding quality of service of the service transmitted on a path between the access device and the network device.

In an implementation, the first packet further includes a first detection identifier; the first detection identifier is used to indicate to detect the quality of service of the service; and the determining, by the packet receiving device, the quality of service of the service based on the session information of the service and the packet type of the first packet includes: determining, by the packet receiving device based on the packet type of the first packet, that the first packet is a detection packet; determining, by the packet receiving device, a context of the first packet based on the first detection identifier, where the context of the first packet includes an expected receiving periodicity; and determining, by the packet receiving device, the quality of service of the service based on the session information of the service, the expected receiving periodicity, and arrival information of the first packet.

In an implementation, the determining, by the packet receiving device, the quality of service of the service based on the session information of the service and the packet type of the first packet includes: determining, by the packet receiving device based on the packet type of the first packet, that the first packet is a detection packet; determining, by the packet receiving device, a context of the service based on the session information of the service, where the context of the service includes an expected receiving periodicity; and determining, by the packet receiving device, the quality of service of the service based on the session information of the service, the expected receiving periodicity, and arrival information of the first packet.

In an implementation, the first packet further includes a sending periodicity; and the determining, by the packet receiving device, the quality of service of the service based on the session information of the service and the packet type of the first packet includes: determining, by the packet receiving device based on the packet type of the first packet, that the first packet is a detection packet; and determining, by the packet receiving device, the quality of service of the service based on the session information of the service, the sending periodicity, and arrival information of the first packet.

In an implementation, the packet receiving device includes an access device, and the packet sending device includes a terminal; or the packet receiving device includes a terminal, and the packet sending device includes an access device. The first packet further includes a second detection identifier, where the second detection identifier is used to indicate to detect second segment quality of service of the service, and the second segment quality of service of the service includes corresponding quality of service of the service transmitted on a path between the access device and the terminal. Correspondingly, the determining, by the packet receiving device, segment quality of service of the service based on the session information of the service and the packet type of the first packet includes: determining, by the packet receiving device based on the packet type of the first packet, that the first packet is a detection packet; determining, by the packet receiving device, a context of the first packet based on the second detection identifier, where the context of the first packet includes an expected receiving periodicity; and determining, by the packet receiving device, the second segment quality of service of the service based on the session information of the service, the expected receiving periodicity, and arrival information of the first packet.

In an implementation, the packet receiving device includes an access device, and the packet sending device includes a network device; or the packet receiving device includes a network device, and the packet sending device includes an access device. The first packet further includes a third detection identifier, where the third detection identifier is used to indicate to detect first segment quality of service of the service, and the first segment quality of service of the service includes corresponding quality of service of the service transmitted on a path between the access device and the network device. Correspondingly, the determining, by the packet receiving device, segment quality of service of the service based on the session information of the service and the packet type of the first packet includes: determining, by the packet receiving device based on the packet type of the first packet, that the first packet is a detection packet; determining, by the packet receiving device, a context of the first packet based on the third detection identifier, where the context of the first packet includes an expected receiving periodicity; and determining, by the packet receiving device, the first segment quality of service of the service based on the session information of the service, the expected receiving periodicity, and arrival information of the first packet.

In an implementation, the packet receiving device includes an access device, and the packet sending device includes a network device or a terminal; or the packet receiving device includes a network device, and the packet sending device includes an access device; or the packet receiving device includes a terminal, and the packet sending device includes an access device. Correspondingly, the determining, by the packet receiving device, segment quality of service of the service based on the session information of the service and the packet type of the first packet includes: determining, by the packet receiving device based on the packet type of the first packet, that the first packet is a detection packet; determining, by the packet receiving device, a context of the service based on the session information of the service, where the context of the service includes an expected receiving periodicity; and determining, by the packet receiving device, the segment quality of service of the service based on the session information of the service, the expected receiving periodicity, and arrival information of the first packet.

In an implementation, the packet receiving device includes an access device, and the packet sending device includes a network device or a terminal; or the packet receiving device includes a network device, and the packet sending device includes an access device; or the packet receiving device includes a terminal, and the packet sending device includes an access device. The first packet further includes a sending periodicity. Correspondingly, the determining, by the packet receiving device, segment quality of service of the service based on the session information of the service and the packet type of the first packet includes: determining, by the packet receiving device based on the packet type of the first packet, that the first packet is a detection packet; and determining, by the packet receiving device, the segment quality of service of the service based on the session information of the service, the sending periodicity, and arrival information of the first packet.

In an implementation, the packet receiving device includes a terminal, and the packet sending device includes a network device. The first packet further includes a first detection identifier, where the first detection identifier is used to indicate to detect the quality of service of the service. Correspondingly, the determining, by the packet receiving device, at least one of quality of service of the service or segment quality of service of the service based on the session information of the service and the packet type of the first packet includes: determining, by the packet receiving device, the quality of service of the service based on the first detection identifier, the session information of the service, and the packet type of the first packet. Correspondingly, the method for detecting quality of service of a service disclosed in this embodiment of this application may further include: receiving, by the packet receiving device, a second packet from an access device, where the second packet includes the session information of the service, a packet type of the second packet, and a second detection identifier, the second detection identifier is used to indicate to detect second segment quality of service of the service, and the second segment quality of service of the service includes corresponding quality of service of the service transmitted on a path between the access device and the terminal; determining, by the packet receiving device, the second segment quality of service of the service based on the session information of the service, the packet type of the second packet, and the second detection identifier; and determining, by the packet receiving device, first segment quality of service of the service based on the second segment quality of service of the service and the quality of service of the service, where the first segment quality of service of the service includes corresponding quality of service of the service transmitted on a path between the access device and the network device.

In an implementation, the packet receiving device includes a terminal, and the packet sending device includes an access device. The first packet further includes a second detection identifier, where the second detection identifier is used to indicate to detect second segment quality of service of the service, and the second segment quality of service of the service includes corresponding quality of service of the service transmitted on a path between the access device and the terminal. Correspondingly, the determining, by the packet receiving device, at least one of quality of service of the service or segment quality of service of the service based on the session information of the service and the packet type of the first packet includes: determining, by the packet receiving device, the second segment quality of service of the service based on the second detection identifier, the session information of the service, and the packet type of the first packet. Correspondingly, the method for detecting quality of service of a service disclosed in this embodiment of this application may further include: receiving, by the packet receiving device, a second packet from a network device, where the second packet includes the session information of the service, a packet type of the second packet, and a first detection identifier, and the first detection identifier is used to indicate to detect the quality of service of the service; determining, by the packet receiving device, the quality of service of the service based on the session information of the service, the packet type of the second packet, and the first detection identifier; and determining, by the packet receiving device, first segment quality of service of the service based on the second segment quality of service of the service and the quality of service of the service, where the first segment quality of service of the service includes corresponding quality of service of the service transmitted on a path between the access device and the network device.

In an implementation, the packet receiving device includes a network device, and the packet sending device includes an access device. The first packet further includes a third detection identifier, where the third detection identifier is used to indicate to detect first segment quality of service of the service, and the first segment quality of service of the service includes corresponding quality of service of the service transmitted on a path between the access device and the network device. Correspondingly, the determining, by the packet receiving device, at least one of quality of service of the service or segment quality of service of the service based on the session information of the service and the packet type of the first packet includes: determining, by the packet receiving device, the first segment quality of service of the service based on the third detection identifier, the session information of the service, and the packet type of the first packet. Correspondingly, the method for detecting quality of service of a service disclosed in this embodiment of this application may further include: receiving, by the packet receiving device, a second packet from a terminal, where the second packet includes the session information of the service, a packet type of the second packet, and a first detection identifier, and the first detection identifier is used to indicate to detect the quality of service of the service; determining, by the packet receiving device, the quality of service of the service based on the session information of the service, the packet type of the second packet, and the first detection identifier; and determining, by the packet receiving device, second segment quality of service of the service based on the first segment quality of service of the service and the quality of service of the service, where the second segment quality of service of the service includes corresponding quality of service of the service transmitted on a path between the access device and the terminal.

In an implementation, the packet receiving device includes a network device, and the packet sending device includes a terminal. The first packet further includes a first detection identifier, where the first detection identifier is used to indicate to detect the quality of service of the service. Correspondingly, the determining, by the packet receiving device, at least one of quality of service of the service or segment quality of service of the service based on the session information of the service and the packet type of the first packet includes: determining, by the packet receiving device, the quality of service of the service based on the first detection identifier, the session information of the service, and the packet type of the first packet. Correspondingly, the method for detecting quality of service of a service disclosed in this embodiment of this application may further include: receiving, by the packet receiving device, a second packet from an access device, where the second packet includes the session information of the service, a packet type of the second packet, and a third detection identifier, the third detection identifier is used to indicate to detect first segment quality of service of the service, and the first segment quality of service of the service includes corresponding quality of service of the service transmitted on a path between the access device and the network device; determining, by the packet receiving device, the first segment quality of service of the service based on the session information of the service, the packet type of the second packet, and the third detection identifier; and determining, by the packet receiving device, second segment quality of service of the service based on the first segment quality of service of the service and the quality of service of the service, where the second segment quality of service of the service includes corresponding quality of service of the service transmitted on a path between the access device and the terminal.

In an implementation, the packet receiving device includes an access device, and the packet sending device includes a terminal. The first packet further includes a second detection identifier, where the second detection identifier is used to indicate to detect second segment quality of service of the service, and the second segment quality of service of the service includes corresponding quality of service of the service transmitted on a path between the access device and the terminal. Correspondingly, the determining, by the packet receiving device, at least one of quality of service of the service or segment quality of service of the service based on the session information of the service and the packet type of the first packet includes: determining, by the packet receiving device, the second segment quality of service of the service based on the session information of the service, the packet type of the first packet, and the second detection identifier, where the second segment quality of service of the service includes the corresponding quality of service of the service transmitted on the path between the access device and the terminal. Correspondingly, the method for detecting quality of service of a service disclosed in this embodiment of this application may further include: receiving, by the packet receiving device, a second packet from a network device, where the second packet includes the session information of the service, a packet type of the second packet, and a third detection identifier, the third detection identifier is used to indicate to detect first segment quality of service of the service, and the first segment quality of service of the service includes corresponding quality of service of the service transmitted on a path between the access device and the network device; determining, by the packet receiving device, the first segment quality of service of the service based on the session information of the service, the packet type of the second packet, and the third detection identifier; and determining, by the packet receiving device, the quality of service of the service based on the first segment quality of service of the service and the second segment quality of service of the service.

In an implementation, the packet receiving device includes an access device, and the packet sending device includes a network device. The first packet further includes a third detection identifier, where the third detection identifier is used to indicate to detect first segment quality of service of the service, and the first segment quality of service of the service includes corresponding quality of service of the service transmitted on a path between the access device and the network device. Correspondingly, the determining, by the packet receiving device, at least one of quality of service of the service or segment quality of service of the service based on the session information of the service and the packet type of the first packet includes: determining, by the packet receiving device, the first segment quality of service of the service based on the session information of the service, the packet type of the first packet, and the third detection identifier. Correspondingly, the method for detecting quality of service of a service disclosed in this embodiment of this application may further include: receiving, by the packet receiving device, a second packet from a terminal, where the second packet includes the session information of the service, a packet type of the second packet, and a second detection identifier, the second detection identifier is used to indicate to detect second segment quality of service of the service, and the second segment quality of service of the service includes corresponding quality of service of the service transmitted on a path between the access device and the terminal; determining, by the packet receiving device, the second segment quality of service of the service based on the session information of the service, the packet type of the second packet, and the second detection identifier; and determining, by the packet receiving device, the quality of service of the service based on the first segment quality of service of the service and the second segment quality of service of the service.

In the foregoing method for detecting quality of service of a service, for example, for the operations of the packet receiving device, refer to the operations of the packet receiving device in FIG. 10 or FIG. 12 and the foregoing related written descriptions. Details are not described herein again.

In addition, an embodiment of this application further discloses a method for detecting quality of service of a service, where the method includes: receiving, by a loopback device, a first packet from a packet transceiver device, where the first packet includes first session information of a service, a packet type of the first packet, and a loopback indication; and sending, by the loopback device, a second packet to the packet transceiver device, where the second packet includes second session information of the service, a packet type of the second packet, and the loopback indication, the packet type of the second packet is the same as the packet type of the first packet, and the second packet is used to detect quality of service of the service or segment quality of service of the service.

In an implementation, the loopback device includes a network device; or the loopback device includes an access device, and the packet transceiver device includes a network device. The first session information of the service includes a first tunnel endpoint identifier TEID and a quality of service flow identifier QFI, and the second session information of the service includes a second TEID and the QFI; or the first session information of the service includes a first tunnel endpoint identifier TEID, and the second session information of the service includes a second TEID.

In an implementation, the loopback device includes a terminal; or the loopback device includes an access device, and the packet transceiver device includes a terminal. The first session information of the service includes a QFI, and the second session information of the service includes the QFI; or the first session information of the service includes a first radio bearer identifier and a QFI, and the second session information of the service includes a second radio bearer identifier and the QFI.

In an implementation, the first packet further includes a detection identifier, and the second packet further includes the detection identifier, where the detection identifier is used to indicate to detect the quality of service of the service or the segment quality of service of the service.

In an implementation, the first packet further includes a timestamp, and the second packet further includes the timestamp, where the timestamp is used to represent a moment at which the packet transceiver device sends the first packet to the loopback device, or the timestamp is used to represent a moment at which the packet transceiver device generates the first packet.

In the foregoing method for detecting quality of service of a service, for example, for the operations of the loopback device, refer to the operations of the loopback device in FIG. 18 and the foregoing related written descriptions. Details are not described herein again.

The foregoing mainly describes the solutions provided in the embodiments of this application from the perspective of interaction between network elements. It may be understood that, to implement the foregoing functions, the packet sending device, the packet transceiver device, or the loopback device includes corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the packet sending device, the packet transceiver device, or the loopback device may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in this embodiment of this application, division into modules is an example, and is merely a logical function division. In actual implementation, another division manner may be used.

For example, when the function modules are obtained through division in an integrated manner, FIG. 19 is a schematic structural diagram of a packet sending device 190. The packet sending device 190 includes a transceiver module 1901 and a processing module 1902. The processing module 1902 is configured to generate a first packet, where the first packet includes session information of a service and a packet type of the first packet. The transceiver module 1901 is configured to send the first packet to a packet receiving device, where the first packet is used to detect at least one of quality of service of the service or segment quality of service of the service.

Optionally, the processing module 1902 is specifically configured to: obtain the session information of the service and the packet type of the first packet; and encapsulate the session information of the service and the packet type of the first packet by using a first network protocol stack, to obtain the first packet.

All related content of the steps in the foregoing method embodiments may be cited in function descriptions of the corresponding function modules. Details are not described herein again.

In this embodiment, the packet sending device 190 is presented by the function modules obtained through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the packet sending device 190 may be in the form shown in FIG. 9.

For example, the processor 901 in FIG. 9 may invoke the computer-executable instruction stored in the memory 903, and the packet sending device 190 is enabled to perform the method for detecting quality of service of a service in the foregoing method embodiments.

Specifically, functions/implementation processes of the transceiver module 1901 and the processing module 1902 in FIG. 19 may be implemented by the processor 901 in FIG. 9 by invoking the computer-executable instruction stored in the memory 903. Alternatively, functions/implementation processes of the processing module 1902 in FIG. 19 may be implemented by the processor 901 in FIG. 9 by invoking the computer-executable instruction stored in the memory 903, and functions/implementation processes of the transceiver module 1901 in FIG. 19 may be implemented by the communications interface 904 in FIG. 9.

The packet sending device provided in this embodiment can perform the foregoing method for detecting quality of service of a service. Therefore, for technical effects that can be achieved by the packet sending device, refer to the foregoing method embodiments. Details are not described herein again.

Optionally, an embodiment of this application further provides a chip system. The chip system includes a processor, configured to support a packet sending device in implementing the method for detecting quality of service of a service, for example, generating a first packet. In a possible design, the chip system further includes a memory. The memory is configured to store a program instruction and data that are necessary for the packet sending device. Certainly, the memory may alternatively not exist in the chip system. The chip system may include a chip, or may include a chip and another discrete device. This is not specifically limited in this embodiment of this application.

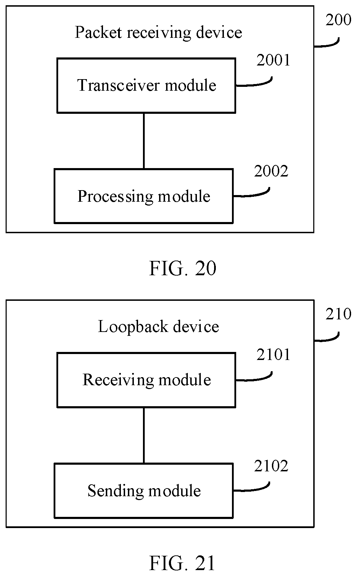

For example, when the function modules are obtained through division in an integrated manner, FIG. 20 is a schematic structural diagram of a packet receiving device 200. The packet receiving device 200 includes a transceiver module 2001 and a processing module 2002. The transceiver module 2001 is configured to receive a first packet from a packet sending device, where the first packet includes session information of a service and a packet type of the first packet. The processing module 2002 is configured to determine at least one of quality of service of the service or segment quality of service of the service based on the session information of the service and the packet type of the first packet.

Optionally, in a possible implementation, the packet receiving device 200 includes a terminal, and the packet sending device includes a network device. The first packet further includes first segment information of the service and first segment quality of service of the service, where the first segment quality of service of the service includes corresponding quality of service of the service transmitted on a path between an access device and the network device. The processing module 2002 is specifically configured to: determine the quality of service of the service based on the session information of the service and the packet type of the first packet; and determine second segment quality of service of the service based on the first segment information of the service, the first segment quality of service of the service, and the quality of service of the service, where the second segment quality of service of the service includes corresponding quality of service of the service transmitted on a path between the access device and the terminal.

In another possible implementation, the packet receiving device 200 includes a network device, and the packet sending device includes a terminal. The first packet further includes second segment information of the service and second segment quality of service of the service, where the second segment quality of service of the service includes corresponding quality of service of the service transmitted on a path between an access device and the terminal. The processing module 2002 is specifically configured to: determine the quality of service of the service based on the session information of the service and the packet type of the first packet; and determine first segment quality of service of the service based on the second segment information of the service, the second segment quality of service of the service, and the quality of service of the service, where the first segment quality of service of the service includes corresponding quality of service of the service transmitted on a path between the access device and the network device.

Optionally, in a possible implementation, the first packet further includes a first detection identifier, and the first detection identifier is used to indicate to detect the quality of service of the service. That the processing module 2002 is configured to determine the quality of service of the service based on the session information of the service and the packet type of a first packet includes: determining, based on the packet type of the first packet, that the first packet is a detection packet; determining a context of the first packet based on the first detection identifier, where the context of the first packet includes an expected receiving periodicity; and determining the quality of service of the service based on the session information of the service, the expected receiving periodicity, and arrival information of the first packet.

In another possible implementation, that the processing module 2002 is configured to determine the quality of service of the service based on the session information of the service and the packet type of the first packet includes: determining, based on the packet type of the first packet, that the first packet is a detection packet; determining a context of the service based on the session information of the service, where the context of the service includes an expected receiving periodicity; and determining the quality of service of the service based on the session information of the service, the expected receiving periodicity, and arrival information of the first packet.

In another possible implementation, the first packet further includes a sending periodicity. That the processing module 2002 is configured to determine the quality of service of the service based on the session information of the service and the packet type of the first packet includes: determining, based on the packet type of the first packet, that the first packet is a detection packet; and determining the quality of service of the service based on the session information of the service, the sending periodicity, and arrival information of the first packet.

Optionally, in a possible implementation, the packet receiving device 200 includes an access device, and the packet sending device includes a terminal; or the packet receiving device 200 includes a terminal, and the packet sending device includes an access device. The first packet further includes a second detection identifier, where the second detection identifier is used to indicate to detect second segment quality of service of the service, and the second segment quality of service of the service includes corresponding quality of service of the service transmitted on a path between the access device and the terminal.

That the processing module 2002 is configured to determine the segment quality of service of the service based on the session information of the service and the packet type of the first packet includes: determining, based on the packet type of the first packet, that the first packet is a detection packet; determining a context of the first packet based on the second detection identifier, where the context of the first packet includes an expected receiving periodicity; and determining the second segment quality of service of the service based on the session information of the service, the expected receiving periodicity, and arrival information of the first packet.

In another possible implementation, the packet receiving device 200 includes an access device, and the packet sending device includes a network device; or the packet receiving device 200 includes a network device, and the packet sending device includes an access device. The first packet further includes a third detection identifier, where the third detection identifier is used to indicate to detect first segment quality of service of the service, and the first segment quality of service of the service includes corresponding quality of service of the service transmitted on a path between the access device and the network device.

That the processing module 2002 is configured to determine the segment quality of service of the service based on the session information of the service and the packet type of the first packet includes: determining, based on the packet type of the first packet, that the first packet is a detection packet; determining a context of the first packet based on the third detection identifier, where the context of the first packet includes an expected receiving periodicity; and determining the first segment quality of service of the service based on the session information of the service, the expected receiving periodicity, and arrival information of the first packet.

In another possible implementation, the packet receiving device 200 includes an access device, and the packet sending device includes a network device or a terminal; or the packet receiving device 200 includes a network device, and the packet sending device includes an access device; or the packet receiving device 200 includes a terminal, and the packet sending device includes an access device.

That the processing module 2002 is configured to determine the segment quality of service of the service based on the session information of the service and the packet type of the first packet includes: determining, based on the packet type of the first packet, that the first packet is a detection packet; determining a context of the service based on the session information of the service, where the context of the service includes an expected receiving periodicity; and determining the segment quality of service of the service based on the session information of the service, the expected receiving periodicity, and arrival information of the first packet.

In another possible implementation, the first packet further includes a sending periodicity. That the processing module 2002 is configured to determine the segment quality of service of the service based on the session information of the service and the packet type of the first packet includes: determining, based on the packet type of the first packet, that the first packet is a detection packet; and determining the segment quality of service of the service based on the session information of the service, the sending periodicity, and arrival information of the first packet.

Optionally, in a possible implementation, the packet receiving device 200 includes a terminal, and the packet sending device includes a network device. The first packet further includes a first detection identifier, where the first detection identifier is used to indicate to detect the quality of service of the service. The processing module 2002 is specifically configured to determine the quality of service of the service based on the first detection identifier, the session information of the service, and the packet type of the first packet.

Correspondingly, the transceiver module 2001 is further configured to receive a second packet from an access device, where the second packet includes the session information of the service, a packet type of the second packet, and a second detection identifier, the second detection identifier is used to indicate to detect second segment quality of service of the service, and the second segment quality of service of the service includes corresponding quality of service of the service transmitted on a path between the access device and the terminal.

The processing module 2002 is further configured to: determine the second segment quality of service of the service based on the session information of the service, the packet type of the second packet, and the second detection identifier; and determine first segment quality of service of the service based on the second segment quality of service of the service and the quality of service of the service, where the first segment quality of service of the service includes corresponding quality of service of the service transmitted on a path between the access device and the network device.

In another possible implementation, the packet receiving device 200 includes a terminal, and the packet sending device includes an access device. The first packet further includes a second detection identifier, where the second detection identifier is used to indicate to detect second segment quality of service of the service, and the second segment quality of service of the service includes corresponding quality of service of the service transmitted on a path between the access device and the terminal. The processing module 2002 is specifically configured to determine the second segment quality of service of the service based on the second detection identifier, the session information of the service, and the packet type of the first packet.

Correspondingly, the transceiver module 2001 is further configured to receive a second packet from a network device, where the second packet includes the session information of the service, a packet type of the second packet, and a first detection identifier, and the first detection identifier is used to indicate to detect the quality of service of the service.

The processing module 2002 is further configured to: determine the quality of service of the service based on the session information of the service, the packet type of the second packet, and the first detection identifier; and determine first segment quality of service of the service based on the second segment quality of service of the service and the quality of service of the service, where the first segment quality of service of the service includes corresponding quality of service of the service transmitted on a path between the access device and the network device.

In another possible implementation, the packet receiving device 200 includes a network device, and the packet sending device includes an access device. The first packet further includes a third detection identifier, where the third detection identifier is used to indicate to detect first segment quality of service of the service, and the first segment quality of service of the service includes corresponding quality of service of the service transmitted on a path between the access device and the network device. The processing module 2002 is specifically configured to determine the first segment quality of service of the service based on the third detection identifier, the session information of the service, and the packet type of the first packet.

Correspondingly, the transceiver module 2001 is further configured to receive a second packet from a terminal, where the second packet includes the session information of the service, a packet type of the second packet, and a first detection identifier, and the first detection identifier is used to indicate to detect the quality of service of the service.

The processing module 2002 is further configured to: determine the quality of service of the service based on the session information of the service, the packet type of the second packet, and the first detection identifier; and determine second segment quality of service of the service based on the first segment quality of service of the service and the quality of service of the service, where the second segment quality of service of the service includes corresponding quality of service of the service transmitted on a path between the access device and the terminal.

In another possible implementation, the packet receiving device 200 includes a network device, and the packet sending device includes a terminal. The first packet further includes a first detection identifier, where the first detection identifier is used to indicate to detect the quality of service of the service. The processing module 2002 is specifically configured to determine the quality of service of the service based on the first detection identifier, the session information of the service, and the packet type of the first packet.

Correspondingly, the transceiver module 2001 is further configured to receive a second packet from an access device, where the second packet includes the session information of the service, a packet type of the second packet, and a third detection identifier, the third detection identifier is used to indicate to detect first segment quality of service of the service, and the first segment quality of service of the service includes corresponding quality of service of the service transmitted on a path between the access device and the network device.

The processing module 2002 is further configured to: determine the first segment quality of service of the service based on the session information of the service, the packet type of the second packet, and the third detection identifier; and determine second segment quality of service of the service based on the first segment quality of service of the service and the quality of service of the service, where the second segment quality of service of the service includes corresponding quality of service of the service transmitted on a path between the access device and the terminal.

In another possible implementation, the packet receiving device 200 includes an access device, and the packet sending device includes a terminal. The first packet further includes a second detection identifier, where the second detection identifier is used to indicate to detect second segment quality of service of the service, and the second segment quality of service of the service includes corresponding quality of service of the service transmitted on a path between the access device and the terminal. The processing module 2002 is specifically configured to determine the second segment quality of service of the service based on the session information of the service, the packet type of the first packet, and the second detection identifier, where the second segment quality of service of the service includes the corresponding quality of service of the service transmitted on the path between the access device and the terminal.

Correspondingly, the transceiver module 2001 is further configured to receive a second packet from a network device, where the second packet includes the session information of the service, a packet type of the second packet, and a third detection identifier, the third detection identifier is used to indicate to detect first segment quality of service of the service, and the first segment quality of service of the service includes corresponding quality of service of the service transmitted on a path between the access device and the network device.

The processing module 2002 is further configured to: determine the first segment quality of service of the service based on the session information of the service, the packet type of the second packet, and the third detection identifier; and determine the quality of service of the service based on the first segment quality of service of the service and the second segment quality of service of the service.

In another possible implementation, the packet receiving device 200 includes an access device, and the packet sending device includes a network device. The first packet further includes a third detection identifier, where the third detection identifier is used to indicate to detect first segment quality of service of the service, and the first segment quality of service of the service includes corresponding quality of service of the service transmitted on a path between the access device and the network device. The processing module 2002 is specifically configured to determine the first segment quality of service of the service based on the session information of the service, the packet type of the first packet, and the third detection identifier.

Correspondingly, the transceiver module 2001 is further configured to receive a second packet from a terminal, where the second packet includes the session information of the service, a packet type of the second packet, and a second detection identifier, the second detection identifier is used to indicate to detect second segment quality of service of the service, and the second segment quality of service of the service includes corresponding quality of service of the service transmitted on a path between the access device and the terminal.

The processing module 2002 is further configured to: determine the second segment quality of service of the service based on the session information of the service, the packet type of the second packet, and the second detection identifier; and determine the quality of service of the service based on the first segment quality of service of the service and the second segment quality of service of the service.

All related content of the steps in the foregoing method embodiments may be cited in function descriptions of the corresponding function modules. Details are not described herein again.

In this embodiment, the packet receiving device 200 is presented by the function modules obtained through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the packet receiving device 200 may be in the form shown in FIG. 9.

For example, the processor 901 in FIG. 9 may invoke the computer-executable instruction stored in the memory 903, and the packet receiving device 200 is enabled to perform the method for detecting quality of service of a service in the foregoing method embodiments.

Specifically, functions/implementation processes of the transceiver module 2001 and the processing module 2002 in FIG. 20 may be implemented by the processor 901 in FIG. 9 by invoking the computer-executable instruction stored in the memory 903. Alternatively, functions/implementation processes of the processing module 2002 in FIG. 20 may be implemented by the processor 901 in FIG. 9 by invoking the computer-executable instruction stored in the memory 903, and functions/implementation processes of the transceiver module 2001 in FIG. 20 may be implemented by the communications interface 904 in FIG. 9.

The packet receiving device provided in this embodiment can perform the foregoing method for detecting quality of service of a service. Therefore, for technical effects that can be achieved by the packet receiving device, refer to the foregoing method embodiments. Details are not described herein again.

Optionally, an embodiment of this application further provides a chip system. The chip system includes a processor, configured to support a packet receiving device in implementing the foregoing method for detecting quality of service of a service, for example, determining, based on session information of a service and a packet type of a first packet, at least one of quality of service of the service or segment quality of service of the service. In a possible design, the chip system further includes a memory. The memory is configured to store a program instruction and data that are necessary for the packet receiving device. Certainly, the memory may alternatively not exist in the chip system. The chip system may include a chip, or may include a chip and another discrete device. This is not specifically limited in this embodiment of this application.

For example, if the function modules are obtained through division in an integrated manner, FIG. 21 is a schematic structural diagram of a loopback device 210. The loopback device 210 includes a receiving module 2101 and a sending module 2102. The receiving module 2101 is configured to receive a first packet from a packet transceiver device, where the first packet includes first session information of a service, a packet type of the first packet, and a loopback indication. The sending module 2102 is configured to send a second packet to the packet transceiver device, where the second packet includes second session information of the service, a packet type of the second packet, and the loopback indication, the packet type of the second packet is the same as the packet type of the first packet, and the second packet is used to detect quality of service of the service or segment quality of service of the service.

Optionally, in a possible implementation, the loopback device may include a network device; or the loopback device may include an access device, and the packet transceiver device may include a network device. Correspondingly, the first session information of the service includes a first TEID and a QFI, and the second session information of the service includes a second TEID and the QFI; or the first session information of the service includes a first TEID, and the second session information of the service includes a second TEID.

In another possible implementation, the loopback device may include a terminal; or the loopback device may include an access device, and the packet transceiver device may include a terminal. Correspondingly, the first session information of the service includes a QFI, and the second session information of the service includes the QFI; or the first session information of the service includes a first radio bearer identifier and a QFI, and the second session information of the service includes a second radio bearer identifier and the QFI.

Optionally, in this embodiment of this application, the first packet may further include a detection identifier, and the second packet may further include the detection identifier, where the detection identifier is used to indicate to detect the quality of service of the service or the segment quality of service of the service.

Optionally, in this embodiment of this application, the first packet may further include a timestamp, and the second packet may further include the timestamp, where the timestamp is used to represent a moment at which the packet transceiver device sends the first packet to the loopback device, or the timestamp is used to represent a moment at which the packet transceiver device generates the first packet.

All related content of the steps in the foregoing method embodiments may be cited in function descriptions of the corresponding function modules. Details are not described herein again.

In this embodiment, the loopback device 210 is presented by the function modules obtained through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the loopback device 210 may be in a form shown in FIG. 9.

For example, the processor 901 in FIG. 9 may invoke the computer-executable instruction stored in the memory 903, and the loopback device 210 is enabled to perform the method for detecting quality of service of a service in the foregoing method embodiments.

Specifically, functions/implementation processes of the receiving module 2101 and the sending module 2102 in FIG. 21 may be implemented by the processor 901 in FIG. 9 by invoking the computer-executable instruction stored in the memory 903. Alternatively, functions and implementation processes of the receiving module 2101 and the sending module 2102 in FIG. 21 may be implemented by the communications interface 904 in FIG. 9.

The loopback device provided in this embodiment can perform the foregoing method for detecting quality of service of a service. Therefore, for technical effects that can be achieved by the loopback device, refer to the foregoing method embodiments. Details are not described herein again.

Optionally, an embodiment of this application further provides a chip system. The chip system includes a processor, configured to support a loopback device in implementing the method for detecting quality of service of a service, for example, generating a second packet. In a possible design, the chip system further includes a memory. The memory is configured to store a program instruction and data that are necessary for the loopback device. Certainly, the memory may alternatively not exist in the chip system. The chip system may include a chip, or may include a chip and another discrete device. This is not specifically limited in this embodiment of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

The invention is solely defined in the appended independent claims to which reference should be made. Advantageous features are set out in the appended dependent claims.

## Claims

1. A method for detecting quality of service of a quality of service, QoS, flow, wherein the method comprises:
generating, by a packet sending device (501), a first packet in a service flow within a 5G QoS flow, wherein the first packet comprises session information of a service associated with the service flow and a packet type of the first packet, wherein the session information of the service comprises a QoS Flow identifier, QFI, of the QoS flow and a tunnel endpoint identifier, TEID, and the packet type of the first packet indicating that the first packet is a detection packet, and, the detection packet uses a 3rd generation partnership project, 3GPP, network protocol stack of service packet of the service flow; and
sending, by the packet sending device (501), the first packet to a packet receiving device (502), wherein the first packet is for detecting quality of service of the QoS flow;
wherein the first packet includes a timestamp, wherein the timestamp is used to represent a moment at which the packet sending device sends the first packet to the packet receiving device; and
wherein the first packet is for determining, by the packet receiving device (502), based on the packet type of the first packet, that the first packet is a detection packet; and for determining, by the packet receiving device (502), the quality of service of the QoS flow based on a transmission delay between the packet sending device (501) and the packet receiving device (502).

2. The method according to claim 1, wherein the generating, by a packet sending device, a first packet comprises:
obtaining, by the packet sending device, the session information of the service and the packet type of the first packet; and
encapsulating, by the packet sending device, the session information of the service and the packet type of the first packet by using a first network protocol stack, to obtain the first packet.

3. The method according to claim 2, wherein the packet sending device comprises a terminal, and the packet receiving device comprises an access device or a network device; or the packet sending device comprises an access device, and the packet receiving device comprises a terminal; and
the session information of the service is encapsulated by using at least one of a service data adaptation protocol, SDAP, or a packet data convergence protocol, PDCP, in the first network protocol stack, and the packet type of the first packet is encapsulated by using the SDAP or the PDCP in the first network protocol stack.

4. The method according to claim 2, wherein the packet sending device comprises an access device, and the packet receiving device comprises a network device; or the packet sending device comprises the network device, and the packet receiving device comprises a terminal or an access device; and
the session information of the service and the packet type of the first packet are encapsulated by using a GPRS tunnelling protocol for the user plane, GTP-U, in the first network protocol stack.

5. The method according to claim 2, wherein the packet sending device comprises an access device, and the packet receiving device comprises a network device; or the packet sending device comprises the network device, and the packet receiving device comprises a terminal or an access device; and
the session information of the service is encapsulated by using a GTP-U in the first network protocol stack, and the packet type of the first packet is encapsulated by using a traffic flow control protocol, TFCP, in the first network protocol stack; or
the session information of the service and the packet type of the first packet are encapsulated by using a TFCP in the first network protocol stack.

6. A method for detecting quality of service of a quality of service, QoS, flow, wherein the method comprises:
receiving, by a packet receiving device (502), a first packet in a service flow within a 5G QoS flow from a packet sending device (501), wherein the first packet comprises session information of a service associated with the service flow and a packet type of the first packet, wherein the session information of the service comprises a QoS Flow identifier, QFI, of the QoS flow and a tunnel endpoint identifier, TEID, and the packet type of the first packet indicating that the first packet is a detection packet, and, the detection packet uses a 3rd generation partnership project, 3GPP, network protocol stack of service packet of the service flow; and
determining, by the packet receiving device (502), quality of service of the QoS flow based on the session information of the service and the packet type of the first packet;
wherein the first packet includes a timestamp, wherein the timestamp is used to represent a moment at which the packet sending device sends the first packet to the packet receiving device; and
wherein the first packet is for determining, by the packet receiving device (502), based on the packet type of the first packet, that the first packet is a detection packet; and for determining, by the packet receiving device (502), the quality of service of the QoS flow based on a transmission delay between the packet sending device (501) and the packet receiving device (502).

7. The method according to claim 6, wherein the packet receiving device comprises a network device; the packet sending device comprises an access device; and
the session information of the service and the packet type of the first packet are encapsulated by using a GPRS tunneling protocol for the user plane, GTP-U, in a first network protocol stack.

8. A packet sending device, configured to perform the method according to any one of claims 1 to 5.

9. A packet receiving device, configured to perform the method according to any one of claims 6 to 7.

10. A system for detecting quality of service of a service, wherein the system for detecting quality of service of a service comprises a packet sending device configured to perform the method according to any one of claims 1 to 5, and a packet receiving device configured to perform the method according to any one of claims 6 to 7.

## Patentansprüche

1. Verfahren zum Erkennen einer Dienstgüte eines Dienstgüte(QOS)-Flusses, wobei das Verfahren umfasst:
Erzeugen, durch eine Paketsendevorrichtung (501), eines ersten Pakets in einem Dienstfluss innerhalb eines 5G-QoS-Flusses, wobei das erste Paket Sitzungsinformationen eines Dienstes, der mit dem Dienstfluss verknüpft ist, und einen Pakettyp des ersten Pakets umfasst, wobei die Sitzungsinformationen des Dienstes eine QoS-Flusskennung (QFI) des QoS-Flusses und eine Tunnelendpunktkennung (TEID) umfassen und der Pakettyp des ersten Pakets anzeigt, dass das erste Paket ein Erkennungspaket ist, und das Erkennungspaket einen 3rd-Generation-Partnership-Project(3GPP)-Netzwerkprotokollstapel des Dienstpakets des Dienstflusses verwendet; und
Senden, durch die Paketsendevorrichtung (501), des ersten Pakets an eine Paketempfangsvorrichtung (502), wobei das erste Paket zum Erkennen der Dienstgüte des QoS-Flusses dient;
wobei das erste Paket einen Zeitstempel einschließt, wobei der Zeitstempel verwendet wird, um einen Zeitpunkt darzustellen, zu dem die Paketsendevorrichtung das erste Paket an die Paketempfangsvorrichtung sendet; und
wobei das erste Paket zum Bestimmen, durch die Paketempfangsvorrichtung (502), basierend auf dem Pakettyp des ersten Pakets, dass das erste Paket ein Erkennungspaket ist; und zum Bestimmen, durch die Paketempfangsvorrichtung (502), der Dienstgüte des QoS-Flusses basierend auf einer Übertragungsverzögerung zwischen der Paketsendevorrichtung (501) und der Paketempfangsvorrichtung (502) dient.

2. Verfahren nach Anspruch 1, wobei das Erzeugen, durch eine Paketsendevorrichtung, eines dritten Pakets umfasst:
Erhalten, durch die Paketsendevorrichtung, der Sitzungsinformationen des Dienstes und des Pakettyps des ersten Pakets; und
Einkapseln, durch die Paketsendevorrichtung, der Sitzungsinformationen des Dienstes und des Pakettyps des ersten Pakets durch Verwenden eines ersten Netzwerkprotokollstapels, um das erste Paket zu erhalten.

3. Verfahren nach Anspruch 2, wobei die Paketsendevorrichtung ein Endgerät umfasst und die Paketempfangsvorrichtung eine Zugangsvorrichtung oder eine Netzwerkvorrichtung umfasst; oder die Paketsendevorrichtung eine Zugangsvorrichtung umfasst und die Paketempfangsvorrichtung ein Endgerät umfasst; und
die Sitzungsinformationen des Dienstes durch Verwenden von mindestens einem von einem Dienstdatenanpassungprotokoll (SDAP) oder einem Paketdatenkonvergenzprotokoll (PDCP) in dem ersten Netzwerkprotokollstapel eingekapselt werden, und der Pakettyp des ersten Pakets durch Verwenden des SDAP oder des PDCP in dem ersten Netzwerkprotokollstapel eingekapselt wird.

4. Verfahren nach Anspruch 2, wobei die Paketsendevorrichtung eine Zugangsvorrichtung umfasst und die Paketempfangsvorrichtung eine Netzwerkvorrichtung umfasst; oder die Paketsendevorrichtung die Netzwerkvorrichtung umfasst und die Paketempfangsvorrichtung ein Endgerät oder eine Zugangsvorrichtung umfasst; und
die Sitzungsinformationen des Dienstes und der Pakettyp des ersten Pakets durch Verwenden eines GPRS-Tunnelling-Protokolls für die Benutzerebene (GTP-U) in dem ersten Netzwerkprotokollstapel eingekapselt werden.

5. Verfahren nach Anspruch 2, wobei die Paketsendevorrichtung eine Zugangsvorrichtung umfasst und die Paketempfangsvorrichtung eine Netzwerkvorrichtung umfasst; oder die Paketsendevorrichtung die Netzwerkvorrichtung umfasst und die Paketempfangsvorrichtung ein Endgerät oder eine Zugangsvorrichtung umfasst; und
die Sitzungsinformationen des Dienstes durch Verwenden eines GTP-U in dem ersten Netzwerkprotokollstapel eingekapselt werden und der Pakettyp des ersten Pakets durch Verwenden eines Verkehrsflusssteuerungsprotokolls (TFCP) in dem ersten Netzwerkprotokollstapel eingekapselt wird; oder
die Sitzungsinformationen des Dienstes und der Pakettyp des ersten Pakets durch Verwenden eines TFCP in dem ersten Netzwerkprotokollstapel eingekapselt werden.

6. Verfahren zum Erkennen einer Dienstgüte eines Dienstgüte(QOS)-Flusses, wobei das Verfahren umfasst:
Empfangen, durch eine Paketempfangsvorrichtung (502), eines ersten Pakets in einem Dienstfluss innerhalb eines 5G-QoS-Flusses von einer Paketsendevorrichtung (501), wobei das erste Paket Sitzungsinformationen eines Dienstes, der mit dem Dienstfluss verknüpft ist, und einen Pakettyp des ersten Pakets umfasst, wobei die Sitzungsinformationen des Dienstes eine QoS-Flusskennung (QFI) des QoS-Flusses und eine Tunnelendpunktkennung (TEID) umfassen und der Pakettyp des ersten Pakets anzeigt, dass das erste Paket ein Erkennungspaket ist, und das Erkennungspaket einen 3rd-Generation-Partnership-Project(3GPP)-Netzwerkprotokollstapel des Dienstpakets des Dienstflusses verwendet; und Bestimmen, durch die Paketempfangsvorrichtung (502), der Dienstgüte des QoS-Flusses basierend auf den Sitzungsinformationen des Dienstes und dem Pakettyp des ersten Pakets;
wobei das erste Paket einen Zeitstempel einschließt, wobei der Zeitstempel verwendet wird, um einen Zeitpunkt darzustellen, zu dem die Paketsendevorrichtung das erste Paket an die Paketempfangsvorrichtung sendet; und
wobei das erste Paket zum Bestimmen, durch die Paketempfangsvorrichtung (502), basierend auf dem Pakettyp des ersten Pakets dient, dass das erste Paket ein Erkennungspaket ist; und zum Bestimmen, durch die Paketempfangsvorrichtung (502), der Dienstgüte des QoS-Flusses basierend auf einer Übertragungsverzögerung zwischen der Paketsendevorrichtung (501) und der Paketempfangsvorrichtung (502).

7. Verfahren nach Anspruch 6, wobei die Paketempfangsvorrichtung eine Netzwerkvorrichtung umfasst; die Paketsendevorrichtung eine Zugangsvorrichtung umfasst; und
die Sitzungsinformationen des Dienstes und der Pakettyp des ersten Pakets durch Verwenden eines GPRS-Tunneling-Protokolls für die Benutzerebene (GTP-U) in einem ersten Netzwerkprotokollstapel eingekapselt werden.

8. Paketsendevorrichtung, die konfiguriert ist, um das Verfahren nach einem der Ansprüche 1 bis 5 durchzuführen.

9. Paketempfangsvorrichtung, die konfiguriert ist, um das Verfahren nach einem der Ansprüche 6 bis 7 durchzuführen.

10. System zum Erkennen der Dienstgüte eines Dienstes, wobei das System zum Erkennen der Dienstgüte eines Dienstes eine Paketsendevorrichtung, die konfiguriert ist, um das Verfahren nach einem der Ansprüche 1 bis 5 durchzuführen, und eine Paketempfangsvorrichtung, die konfiguriert ist, um das Verfahren nach einem der Ansprüche 6 bis 7 durchzuführen, umfasst.

## Revendications

1. Procédé de détection d'une qualité de service d'un flux de qualité de service, QoS, dans lequel le procédé comprend :
la génération, par un dispositif d'envoi de paquets (501), d'un premier paquet dans un flux de service au sein d'un flux QoS 5G, dans lequel le premier paquet comprend des informations de session d'un service associé au flux de service et un type de paquet du premier paquet, dans lequel les informations de session du service comprennent un identifiant de flux QoS, QFI, du flux QoS et un identifiant de point d'extrémité de tunnel, TEID, et le type de paquet du premier paquet indiquant que le premier paquet est un paquet de détection, et, le paquet de détection utilise une pile de protocoles de réseau du projet de partenariat de troisième génération, 3GPP, du paquet de service du flux de service ; et
l'envoi, par le dispositif d'envoi de paquets (501), du premier paquet à un dispositif de réception de paquets (502), dans lequel le premier paquet sert à détecter la qualité de service du flux QoS ;
dans lequel le premier paquet comporte un horodatage, dans lequel l'horodatage est utilisé pour représenter un moment où le dispositif d'envoi de paquets envoie le premier paquet au dispositif de réception de paquets ; et
dans lequel le premier paquet est destiné à déterminer, par le dispositif de réception de paquets (502), sur la base du type de paquet du premier paquet, que le premier paquet est un paquet de détection ; et destiné à déterminer, par le dispositif de réception de paquets (502), la qualité de service du flux QoS sur la base d'un délai de transmission entre le dispositif d'envoi de paquets (501) et le dispositif de réception de paquets (502).

2. Procédé selon la revendication 1, dans lequel la génération, par un dispositif d'envoi de paquets, d'un premier paquet comprend :
l'obtention, par le dispositif d'envoi de paquets, des informations de session du service et le type de paquet du premier paquet ; et
l'encapsulation, par le dispositif d'envoi de paquets, des informations de session du service et du type de paquet du premier paquet en utilisant une première pile de protocoles de réseau, afin d'obtenir le premier paquet.

3. Procédé selon la revendication 2, dans lequel le dispositif d'envoi de paquets comprend un terminal, et le dispositif de réception de paquets comprend un dispositif d'accès ou un dispositif de réseau ; ou le dispositif d'envoi de paquets comprend un dispositif d'accès, et le dispositif de réception de paquets comprend un terminal ; et les informations de session du service sont encapsulées en utilisant au moins l'un parmi un protocole d'adaptation de données de service, SDAP, ou un protocole de convergence de données par paquets, PDCP, dans la première pile de protocoles de réseau, et le type de paquet du premier paquet est encapsulé en utilisant le SDAP ou le PDCP dans la première pile de protocoles de réseau.

4. Procédé selon la revendication 2, dans lequel le dispositif d'envoi de paquets comprend un dispositif d'accès, et le dispositif de réception de paquets comprend un dispositif de réseau ; ou le dispositif d'envoi de paquets comprend le dispositif de réseau, et le dispositif de réception de paquets comprend un terminal ou un dispositif d'accès ; et les informations de session du service et le type de paquet du premier paquet sont encapsulés en utilisant un protocole de tunnellisation GPRS pour le plan utilisateur, GTP-U, dans la première pile de protocoles de réseau.

5. Procédé selon la revendication 2, dans lequel le dispositif d'envoi de paquets comprend un dispositif d'accès, et le dispositif de réception de paquets comprend un dispositif de réseau ; ou le dispositif d'envoi de paquets comprend le dispositif de réseau, et le dispositif de réception de paquets comprend un terminal ou un dispositif d'accès ; et les informations de session du service sont encapsulées en utilisant un GTP-U dans la première pile de protocoles de réseau, et le type de paquet du premier paquet est encapsulé en utilisant un protocole de contrôle du flux de trafic, TFCP, dans la première pile de protocoles de réseau ; ou
les informations de session du service et le type de paquet du premier paquet sont encapsulés en utilisant un TFCP dans la première pile de protocoles de réseau.

6. Procédé de détection de la qualité de service d'un flux de qualité de service, QoS, dans lequel le procédé comprend :
la réception, par un dispositif de réception de paquets (502), d'un premier paquet dans un flux de service au sein d'un flux QoS 5G à partir d'un dispositif d'envoi de paquets (501), dans lequel le premier paquet comprend des informations de session d'un service associé au flux de service et un type de paquet du premier paquet, dans lequel les informations de session du service comprennent un identifiant de flux QoS, QFI, du flux QoS et un identifiant de point d'extrémité de tunnel, TEID, et le type de paquet du premier paquet indiquant que le premier paquet est un paquet de détection, et, le paquet de détection utilise une pile de protocoles de réseau de projet de partenariat de troisième génération, 3GPP, du paquet de service du flux de service ; et la détermination, par le dispositif de réception de paquets (502), de la qualité de service du flux QoS sur la base des informations de session du service et du type de paquet du premier paquet ;
dans lequel le premier paquet comporte un horodatage, dans lequel l'horodatage est utilisé pour représenter un moment où le dispositif d'envoi de paquets envoie le premier paquet au dispositif de réception de paquets ; et
dans lequel le premier paquet est destiné à déterminer, par le dispositif de réception de paquets (502), sur la base du type de paquet du premier paquet, que le premier paquet est un paquet de détection ; et destiné à déterminer, par le dispositif de réception de paquets (502), la qualité de service du flux QoS sur la base d'un délai de transmission entre le dispositif d'envoi de paquets (501) et le dispositif de réception de paquets (502).

7. Procédé selon la revendication 6, dans lequel le dispositif de réception de paquets comprend un dispositif de réseau ; le dispositif d'envoi de paquets comprend un dispositif d'accès ; et
les informations de session du service et le type de paquet du premier paquet sont encapsulés en utilisant un protocole de tunnellisation GPRS pour le plan utilisateur, GTP-U, dans une première pile de protocoles de réseau.

8. Dispositif d'envoi de paquets, configuré pour effectuer le procédé selon l'une quelconque des revendications 1 à 5.

9. Dispositif de réception de paquets, configuré pour effectuer le procédé selon l'une quelconque des revendications 6 à 7.

10. Système de détection de la qualité de service d'un service, dans lequel le système de détection de la qualité de service d'un service comprend un dispositif d'envoi de paquets configuré pour effectuer le procédé selon l'une quelconque des revendications 1 à 5, et un dispositif de réception de paquets configuré pour effectuer le procédé selon l'une quelconque des revendications 6 à 7.
